# EUROPÄISCHE PATENTSCHRIFT

(11) **EP 4 396 052 B1**
(45) Veröffentlichungstag und Bekanntmachung des Hinweises auf die Patenterteilung: **26.03.2025**
(21) Anmeldenummer: 22765853.1
(22) Anmeldetag: 18.08.2022
(51) Int. Cl.: B60T 13/38, B60T 13/68, B60T 17/22

(54) **BETRIEBSSICHERE PARKBREMSVENTILEINHEIT MIT EINEM BYPASSVENTIL**
RELIABLE PARKING BRAKE VALVE UNIT WITH A BYPASS VALVE
UNITÉ DE SOUPAPE DE FREIN DE STATIONNEMENT FIABLE AVEC UNE SOUPAPE DE DÉRIVATION

(30) Priorität: 31.08.2021 DE 102021122498
(43) Veröffentlichungstag der Anmeldung: 10.07.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2022/073022
(87) Internationale Veröffentlichungsnummer: WO 2023/030898

(56) Entgegenhaltungen:
- WO-A1-2019/068393
- DE-A1- 102019 131 110
- DE-A1- 102019 133 010
- DE-B3- 102008 007 877

## Beschreibung

Die Erfindung betrifft eine elektropneumatische Feststellbremseinrichtung zur Belüftung und Entlüftung von einem oder mehreren Federspeicherzylindern eines elektronisch steuerbaren pneumatischen Bremssystems für ein Fahrzeug, umfassend eine Parkbremsventileinheit mit einem Vorratsanschluss zum Empfangen von Vorratsdruck von einem Parkbrems-Vorrat, wobei die Parkbremsventileinheit in Abhängigkeit von einem Parkbremssignal einen Parkbremsdruck an wenigstens einem Federspeicheranschluss aussteuert, und ein zwischen der Parkbremsventileinheit und dem Parkbrems-Vorrat (26) angeordnetes Rückschlagventil, um ein Rückströmen von Druckluft von der Parkbremsventileinheit zum Parkbrems-Vorrat zu verhindern.

Die Erfindung betrifft ferner ein elektronisch steuerbares pneumatisches Bremssystem für ein Fahrzeug, umfassend wenigstens einen ersten Vorderachsbremsaktuator und einen zweiten Vorderachsbremsaktuator an einer Vorderachse des Fahrzeugs und wenigstens einen ersten Hinterachsbremsaktuator und einen zweiten Hinterachsbremsaktuator an einer Hinterachse des Fahrzeugs, sowie ein Primärsystem mit einer Primär-Steuereinheit wenigstens zum Ansteuern des ersten Vorderachsbremsaktuators, des zweiten Vorderachsbremsaktuators, des ersten Hinterachsbremsaktuators und des zweiten Hinterachsbremsaktuators.

Die Erfindung betrifft weiter ferner Verfahren zum Steuern eines elektronisch steuerbaren pneumatischen Bremssystems, mit den Schritten: Ansteuern einer Parkbremsventileinheit mittels einer Parkbrems-Steuereinheit zum Be- und Entlüften von wenigsten einem Federspeicherbremszylinder an einer Hinterachse eines Nutzfahrzeugs, wobei die Parkbremsventileinheit über ein Rückschlagventil mit einem Parkbrems-Vorrat verbunden ist und von diesem Vorratsdruck empfängt; und Ermitteln eines Fehlers in dem elektronisch steuerbaren pneumatischen Bremssystem, insbesondere der Parkbrems-Steuereinheit oder Parkbremsventileinheit.

Elektropneumatische Ventilanordnungen zum Betätigen einer Feststellbrems-funktion werden sowohl im europäischen als auch im US-amerikanischen Raum eingesetzt. Eine Feststellbremsfunktion eines elektropneumatischen Bremssystems nutzt in der Regel sogenannte Federspeicherbremszylinder, die aufgrund einer Federkraft zuspannen und im belüfteten Zustand geöffnet sind. Während der Fahrt sollen dieser Federspeicherbremszylinder also belüftet und damit geöffnet sein, während sie im geparkten Zustand des Fahrzeugs entlüftet werden und damit zuspannen.

Eine Lösung, um derartige Federspeicherbremszylinder zu belüften, ist in DE 10 2017 005 757 A1 offenbart. Die dort offenbarte Lösung nutzt eine Vorsteuerventileinheit sowie eine Hauptventileinheit, wobei die Vorsteuerventileinheit ein elektromagnetisches Magnetventil in Form eines Bistabilventils umfasst. Die Hauptventileinheit ist in der dort offenbarten Lösung durch ein Relaisventil gebildet. Je nach Schaltstellung des elektromagnetischen Bistabilventils wird ein Steuerdruck an der Hauptventileinheit ausgesteuert, die dann in entsprechender Weise einen Volumendruck für die Federspeicherbremszylinder aussteuert. Als Bistabilventil wird ein Magnetventil bezeichnet, welches zwei stabile Schaltstellungen, insbesondere eine stabile Belüftungsstellung und eine stabile Entlüftungsstellung hat. Zu diesem Zweck kann durch Bestromen eines ersten Elektromagneten ein Anker des Magnetventils in eine erste Stellung verbracht werden, sodass das Magnetventil die Belüftungsstellung einnimmt und durch Bestromen eines zweiten Elektromagneten der Anker des Magnetventils in eine zweite Stellung verbracht werden, sodass das Magnetventil die Entlüftungsstellung einnimmt. Wenn dann keine andere Kraft auf den Anker wirkt, oder dieser in den Stellungen mechanisch und/oder magnetisch verrastbar ist, ist die jeweilige Schaltstellung stabil, da sie ohne weitere Bestromung aufrechterhalten bleiben kann.

Eine Bremsanlage mit einer weiteren gattungsgemäßen Parkbremseinrichtung ist in DE 103 36 611 A1 offenbart. Sie offenbart eine druckmittelbetriebene Bremsanlage für ein Fahrzeug mit einer Feststellbrems-Funktion, bei der infolge manueller Betätigung eines elektrischen Feststellbrems-Signalgebers wenigstens eine Radbremse der Bremsanlage ohne Betätigung eines Bremspedals über einen mit dem Druckmittel beaufschlagbaren Aktuator betätigbar ist. Hiervon ausgehend, wird eine druckmittelbetriebene Bremsanlage für ein Fahrzeug angegeben, bei der eine über einen elektrischen Signalgeber betätigbare Feststegbrems-Funktion unter Einhaltung der einschlägigen Sicherheitsbestimmungen für Bremsanlagen mit geringem Aufwand integrierbar ist. Dies wird dadurch erreicht, dass ein Feststellbrems-Modul vorgesehen ist, in welche eine elektronische Steuereinrichtung sowie eine von der elektronischen Steuereinrichtung elektrisch betätigbare Ventileinrichtung integriert sind, wobei die elektronische Steuereinrichtung bei Empfang eines die Aktivierung der Feststellbrems-Funktion anfordernden elektrischen Betätigungssignals des Feststellbrems-Signalgebers die Feststegbrems-Funktion aktiviert, wobei die elektronische Steuereinrichtung im Rahmen der Feststellbrems-Funktion mittels der elektrisch betätigbaren Ventileinrichtung die Druckmittel-Beaufschlagung des Aktuators steuert.

Ferner offenbart DE 10 2008 007 877 B3 eine Parkbremseinrichtung für Kraftfahrzeuge mit einem von einem Relaisventil ansteuerbaren FederspeicherBremszylinder, wobei das Relaisventil über ein als 3/2-Wegeventil ausgebildetes Sicherheitsventil ansteuerbar ist, dessen Ausgang wahlweise mit einem von zwei Eingängen verbindbar ist, wobei die Eingänge des Sicherheitsventils über ein erstes oder ein zweites Magnetventil, wahlweise mit einer Druckmittelquelle oder Atmosphärendruck, verbindbar sind, und wobei ein Select-Low-Ventil mit dem einen Eingang und dem Ausgang des Sicherheitsventiles verbunden ist und ein Ausgang des Select-Low-Ventils mit einem Steuereingang des Relaisventils verbunden ist. Hierdurch soll die Stabilität des Systems verbessert werden.

Weiterhin ist aus DE 10 2015 008 377 A1 ein Feststellbremsmodul bekannt, mit dem eine Druckmittelbeaufschlagung mindestens eines Bremsaktuators steuerbar ist, wobei das Feststellbremsmodul eine elektronische Steuereinrichtung, mindestens ein von der Steuereinrichtung betätigbares Magnetventil, ein druckmittelmengenverstärkendes Ventil zur Druckmittelbeaufschlagung des mindestens einen Bremsaktuators und mindestens einen Druckmitteleingang, über den dem Feststellbremsmodul Druckmittel zuführbar ist, aufweist. Das Feststellbremsmodul weist einen Notlöse-Druckmittelanschluss und ein Doppelrückschlagventil auf, das Feststellbremsmodul weist eine erste Druckmittelleitung auf, mit der der Notlöse-Druckmittelanschluss über ein Rückschlagventil mit dem Versorgungseingang des druckmittelmengenverstärkenden Ventils derart fluidisch verbunden ist, dass Druckmittel durch diese erste Druckmittelleitung von dem Notlöse-Druckmittelanschluss zu dem druckmittelmengenverstärkenden Ventil strömt, falls der an dem Notlöse-Druckmittelanschluss anliegende Druck größer als der an dem Versorgungseingang des druckmittelmengenverstärkenden Ventils anliegende Druck ist, und das Feststellbremsmodul weist eine zweite Druckmittelleitung auf, mit der der Notlöse-Druckmittelanschluss oder ein weiterer Druckmittelanschluss des Feststellbremsmoduls mit einem Eingang des Doppelrückschlagventils derart fluidisch verbunden ist, dass Druckmittel durch diese zweite Druckmittelleitung von dem Notlöse-Druckmittelanschluss zu dem Doppelrückschlagventil strömt, falls der an dem Notlöse-Druckmittelanschluss anliegende Druck größer als der an dem Eingang des Doppelrückschlagventils anliegende Druck ist, oder dass Druckmittel durch diese zweite Druckmittelleitung von dem weiteren Druckmittelanschluss zu dem Doppelrückschlagventil strömt, falls der an dem weiteren Druckmittelanschluss anliegende Druck größer als der an dem Eingang des Doppelrückschlagventils anliegende Druck ist.

Auch wenn die vorstehend beschriebenen Systeme vorteilhaft sind und in der Praxis gut funktionieren, besteht weiterhin Bedarf, die Sicherheit solcher Systeme weiter zu verbessern. Insbesondere soll auch bei "by wire" angesteuerten Systemen ein Noteinlegen der Parkbremse möglich sein für den Fall, dass ein Parkbremssystem oder eine das Parkbremssystem ansteuernde Steuereinheit nicht oder nicht richtig funktioniert.

Die vorliegende Erfindung löst die Aufgabe bei einer elektropneumatischen Feststellbremseinrichtung der eingangs genannten Art dadurch, dass ein Bypassventil vorgesehen ist, welches zum Belüften und zum Entlüften des Federspeicheranschlusses schaltbar ist, wobei das Bypassventil unabhängig von der Parkbremsventileinheit angesteuert und geschaltet wird.

Das zusätzliche Bypassventil, das neben der im Allgemeinen bekannten Parkbremsventileinheit vorgesehen ist, dient neben der Parkbremsventileinheit zum Be- und/oder Entlüften des Federspeicheranschlusses und ist unabhängig von der Parkbremsventileinheit ansteuer- und schaltbar. Das Bypassventil bildet so einen Bypass zur Parkbremsventileinheit und kann geschaltet werden, entweder zum Belüften und/oder zum Entlüften des Federspeicheranschlusses für den Fall, dass die Parkbremsventileinheit nicht oder nicht richtig funktioniert oder nicht oder nicht richtig angesteuert werden kann. Insofern beruht die Erfindung auf der Idee, dass das Bypassventil unabhängig von der Parkbremsventileinheit angesteuert und auch unabhängig von dieser geschaltet werden kann.

Es hat sich gezeigt, dass bei elektropneumatischen Feststellbremseinrichtungen, bei denen ein Rückschlagventil zwischen der Parkbremsventileinheit und dem Parkbrems-Vorrat angeordnet ist, um ein Rückströmen von Druckluft von der Parkbremsventileinheit zum Parkbrems-Vorrat zu verhindern, ein Noteinlegen der an den Federspeicheranschluss angeschlossenen Federspeicherbremszylinder "by wire" nur erschwert oder gar nicht möglich ist. Typische Routinen zum Noteinlegen von Federspeicherbremszylindern derartiger elektropneumatischer Feststellbremseinrichtungen umfassen ein Absenken des Vorratsdrucks des Parkbrems-Vorrats, ein sogenanntes "Herunterpumpen", um auf diese Weise den Druck abzusenken, der üblicherweise den Federspeicherbremszylindern bereitgestellt werden kann. Sinkt der Vorratsdruck ab, aus dem der Arbeitsdruck für die Federspeicherbremszylinder gespeist wird, spannen die Federspeicherbremszylinder selbsttätig zu, da diese durch die Kraft der Federn zugespannt werden. Ist aber ein Rückschlagventil vorgesehen, kann Druckluft nicht von der Parkbremsventileinheit zum Parkbrems-Vorrat zurückströmen und somit auch kein Druckausgleich vom Federspeicherbremszylinder bis zum abgesenkten Druckluftvorrat stattfinden. Das heißt, unabhängig von dem Niveau in dem Druckluftvorrat bleiben die Federspeicherbremszylinder gelöst, da der in diesen herrschende Druck durch das Rückschlagventil eingesperrt wird. Ein Entlüften der Federspeicherbremszylinder und somit Einlegen der Federspeicherbremszylinder ist nur dann möglich, wenn die Parkbremsventileinheit in eine Entlüftungsstellung geschaltet wird. Dies ist aber gerade bei einem Fehler in der Parkbremsventileinheit oder einer diese ansteuernden elektronischen Steuereinheit nicht möglich. Folglich muss in diesen Fällen ein manuelles Einlegen der Federspeicherbremszylinder beispielsweise durch manuelles Entlüften der Federspeicherbremszylinder erfolgen.

Die Erfindung bietet hier Abhilfe, indem das Bypassventil vorgesehen ist, welches vorzugsweise sowohl zum Be- als auch zum Entlüften des Federspeicheranschlusses schaltbar ist, und zwar unabhängig von der Parkbremsventileinheit. Für den Fall, dass die Parkbremsventileinheit also nicht oder nicht richtig funktioniert oder nicht oder nicht richtig angesteuert werden kann, kann die Bypassventileinheit manuell oder automatisch geschaltet werden, um den Federspeicheranschluss und in der Folge die an diesen angeschlossenen Federspeicherbremszylinder zu entlüften. Auf diese Weise ist ein Noteinlegen der Federspeicherbremszylinder auch dann möglich, wenn die Parkbremsventileinheit nicht oder nicht richtig funktioniert oder nicht oder nicht richtig angesteuert werden kann. Im umgekehrten Fall, wenn ein Belüften und somit Lösen der Federspeicherbremszylinder nicht oder nicht richtig funktioniert, kann das Bypassventil geschaltet werden, um ein Belüften des Federspeicheranschlusses und somit Lösen der an diesen angeschlossenen Federspeicherbremszylinder zu bewirken.

Das Bypassventil kann ein oder mehrere schaltbare elektromagnetische Ventile umfassen, die insbesondere kostengünstiger ausgelegt werden können als Ventile der Parkbremsventileinheit. Das Bypassventil dient nur im Fehlerfall der Parkbremsventileinheit zum Be- oder Entlüften des Federspeicheranschlusses und kommt somit im Betrieb des Fahrzeugs nur sehr selten zum Einsatz. Es dient lediglich dazu, einen Fail-Operational-Betrieb zu ermöglichen, um so eine Redundanzebene für die Parkbremsventileinheit bereitzustellen.

In einer bevorzugten Ausführungsform ist das Bypassventil elektromagnetisch ausgebildet und ist von einer von der Parkbremsventileinheit unabhängigen weiteren elektronischen Steuereinheit ansteuerbar. Die Parkbremsventileinheit wird vorzugsweise von einer Parkbrems-Steuereinheit angesteuert, die Teil der elektropneumatischen Feststellbremseinrichtung sein kann. Die Parkbrems-Steuereinheit kann mit der Parkbremsventileinheit zu einem Modul integriert sein. Die Parkbrems-Steuereinheit kann über eine eigene Intelligenz verfügen, oder nur Endstufen umfassen, die über eine elektrische Verbindung mit einer übergeordneten Steuereinheit verbunden sind. Die weitere elektronische Steuereinheit, die das Bypassventil ansteuert, ist verschieden von der Parkbrems-Steuereinheit. Die weitere elektronische Steuereinheit ist vorzugsweise eine bereits in dem elektronisch steuerbaren pneumatischen Bremssystem vorhandene Steuereinheit, oder eine separat für das Bypassventil vorgesehene Steuereinheit. Besonders effizient und platzsparend ist allerdings, wenn eine bereits im elektronisch steuerbaren pneumatischen Bremssystem vorhandene Steuereinheit verwendet wird, um das Bypassventil anzusteuern. Auf diese Weise kann sichergestellt werden, dass für den Fall, dass die Parkbrems-Steuereinheit einen Fehler hat, das Bypassventil immer noch durch die weitere Steuereinheit angesteuert und geschaltet werden kann, um den Federspeicheranschluss zu be- oder zu entlüften.

Vorzugsweise weist die elektropneumatische Feststellbremseinrichtung einen Bypassdrucksensor auf, zum Erfassen des am Federspeicheranschluss ausgesteuerten Parkbremsdrucks, wobei der Bypassdrucksensor mit der von der Parkbremsventileinheit unabhängigen weiteren elektronischen Steuereinheit verbunden ist. Auf diese Weise kann die weitere elektronische Steuereinheit den am Federspeicheranschluss anliegenden Druck auswerten und in Abhängigkeit davon das Bypassventil ansteuern. Eine Regelung des Parkbremsdrucks kann auf diese Weise realisiert werden.

Weiterhin ist bevorzugt, dass das Bypassventil monostabil ist und eine Sperrstellung sowie eine Durchlassstellung einnehmen kann, wobei das Bypassventil stabil in der Sperrstellung ist. Das Bypassventil kann in diesem Fall beispielsweise als 2/2-Wege-Ventil ausgebildet sein und federbelastet in die Sperrstellung geschaltet werden. Erst durch Bestromen wird das Bypassventil dann in die Durchlassstellung geschaltet, in der der Federspeicheranschluss belüftet bzw. entlüftet werden kann. Um dies bei einem 2/2-Wege-Ventil zu realisieren, ist das als Bypassventil ausgebildete 2/2-Wege-Ventil vorzugsweise mit einem ersten Bypassventilanschluss mit dem Federspeicheranschluss verbunden und mit einem zweiten Bypassventilanschluss mit dem Parkbrems-Vorrat verbunden, bzw. einer Vorratsdruckleitung, die zwischen dem Parkbrems-Vorrat und dem Rückschlagventil verläuft, sodass das Bypassventil das Rückschlagventil umgeht. Für den Fall, dass der Parkbrems-Vorrat nun Druckluft führt und einen ausreichend hohen Druck bereitstellen kann, kann durch Schalten des Bypassventils in die Durchlassstellung unter Umgehung des Rückschlagventils und der Parkbremsventileinheit der Federspeicheranschluss belüftet werden. Für den Fall, dass aufgrund eines Fehlers oder einer Fehlerlöseroutine der Parkbrems-Vorrat weitgehend oder vollständig drucklos ist (beispielsweise durch Herunterpumpen), kann durch Schalten des Bypassventils in die Durchlassstellung unter Umgehung der Parkbremsventileinheit und des Rückschlagventils der Federspeicheranschluss mit dem dann drucklosen Parkbrems-Vorrat verbunden werden, sodass der Federspeicheranschluss in diesem Fall entlüftet werden kann.

Gemäß einer weiteren bevorzugten Ausführungsform ist vorgesehen, dass das Bypassventil einen mit dem Federspeicheranschluss oder einer dem Federspeicheranschluss vorgeschalteten Hauptventileinheit verbundenen ersten Bypassventilanschluss und einen mit einer Entlüftung verbundenen zweiten Bypassventilanschluss aufweist. Alternativ hierzu weist das Bypassventil einen mit dem Federspeicheranschluss oder einer dem Federspeicheranschluss vorgeschalteten Hauptventileinheit verbundenen ersten Bypassventilanschluss und einen mit dem Parkbrems-Vorrat stromaufwärts des Rückschlagventils verbundenen zweiten Bypassventilanschluss auf. Der zweite Bypassventilanschluss kann demnach entweder mit einer Entlüftung oder dem Parkbrems-Vorrat verbunden sein. Dies ist insbesondere dann bevorzugt, wenn das Bypassventil wie vorstehend beschrieben als 2/2-Wege-Ventil ausgebildet ist. Ist der zweite Bypassventilanschluss lediglich mit der Entlüftung verbunden, kann der Federspeicheranschluss durch das Bypassventil in der Durchlassstellung nur entlüftet werden. Ist der zweite Bypassventilanschluss hingegen mit dem Parkbrems-Vorrat verbunden, kann der Federspeicheranschluss belüftet werden, wenn der Parkbrems-Vorrat ausreichend Druck führt, und entlüftet werden, wenn der Parkbrems-Vorrat heruntergepumpt ist.

Gemäß einer bevorzugten Weiterbildung ist vorgesehen, dass das Bypassventil mit der Parkbremsventileinheit als eine Baueinheit ausgebildet ist. Das Bypass-ventil kann dazu mit der Parkbremsventileinheit in einem Modulgehäuse untergebracht sein oder lediglich an die Parkbremsventileinheit angeflanscht bzw. mit dieser formatiert sein. Dies ist besonders vorteilhaft, da auf diese Weise der Montageaufwand reduziert werden kann und Bauteile kompakt ausgebildet werden können. Außerdem können auf diese Weise Schnittstellen zwischen einzelnen Elementen verringert werden und Leitungen entfallen, die sonst anfällig für Leckage sein können.

Vorzugsweise ist das Bypassventil unmittelbar mit einer stromabwärts des Federspeicheranschlusses an diesen angeschlossenen Parkbremsdruckleitung verbunden. Diese Gestaltung ist insbesondere dann vorteilhaft, wenn das Bypassventil extern zu der Parkbremsventileinheit ist, beispielsweise an diese angeflanscht oder außerhalb eines Modulgehäuses an dieser angeordnet, oder als separates Bauteil dargestellt ist. Die unmittelbare Verbindung des Bypassventils mit einer stromabwärts des Federspeicheranschlusses an diesen angeschlossenen Parkbremsdruckleitung, die ihrerseits wiederum zum Federspeicherbremszylinder führt, kann zu einer unmittelbaren Entlüftung bzw. Belüftung des Federspeicherbremszylinders führen. Es ist auch denkbar, dass das Bypassventil unmittelbar an den Federspeicherbremszylinder angeschlossen ist.

In einer bevorzugten Weiterbildung weist die Parkbremsventileinheit eine Vorsteuerventileinheit und eine Hauptventileinheit auf. Eine solche Gestaltung ist im Grunde im Stand der Technik bekannt. In einer solchen Ausbildung ist die Vorsteuerventileinheit dazu vorgesehen, einen Parkbremssteuerdruck an der Hauptventileinheit bereitzustellen, die dann in Abhängigkeit von dem empfangenen Parkbremssteuerdruck den Parkbremsdruck an dem Federspeicheranschluss aussteuert. Die Hauptventileinheit ist hierzu in der Regel volumenverstärkend gebildet und kann beispielsweise ein Relaisventil oder ein pneumatisch schaltbares Hauptventil umfassen. Derartige Gestaltungen lassen eine effizientere Luftnutzung zu, da bei Variation des Parkbremsdrucks nur der im Volumen geringere Parkbremssteuerdruck entlüftet werden muss, sodass ein Luftmengenverbrauch insgesamt reduziert sein kann.

Bevorzugt ist das Bypassventil mit der Hauptventileinheit verbunden, wobei der Parkbremssteuerdruck über das Bypassventil entlüftbar ist. Das Bypassventil ist auf diese Weise vorzugsweise über dieselbe Leitung mit der Hauptventileinheit verbunden, über die auch die Vorsteuerventileinheit mit der Hauptventileinheit verbunden ist. Die Hauptventileinheit ist vorzugsweise rein pneumatisch ausgebildet und kann daher unabhängig von einer Parkbremssteuereinheit und unabhängig von einer Stromquelle schalten. Für den Fall, dass die Vorsteuerventileinheit nicht oder nicht richtig funktioniert, kann auf diese Weise über das Bypassventil der Parkbremssteuerdruck entlüftet werden, sodass in der Folge auch der Federspeicheranschluss entlüftet wird.

In einer bevorzugten Weiterbildung ist das Bypassventil dazu mit einer Bypassabzweigleitung verbunden, die von einer Parkbremssteuerdruckleitung abzweigt, über die von der Vorsteuerventileinheit der Parkbremssteuerdruck an der Hauptventileinheit bereitgestellt wird. In einer weiteren bevorzugten Ausgestaltung ist in der Parkbremssteuerdruckleitung ein erstes Wechselventil vorgesehen, welches einen mit der Vorsteuerventileinheit verbundenen ersten Wechselventilanschluss, einen mit einem Anti-Compound-Anschluss verbundenen zweiten Wechselventilanschluss und einen mit der Hauptventileinheit verbundenen dritten Wechselventilanschluss aufweist. Das erste Wechselventil ist vorzugsweise so ausgebildet, dass jeweils der an dem ersten Wechselventilanschluss und dem zweiten Wechselventilanschluss höhere anstehende Druck an dem dritten Wechselventilanschluss ausgesteuert wird. Diese Gestaltung erlaubt es, entweder den von der Vorsteuerventileinheit ausgesteuerten Parkbremssteuerdruck oder einen über den Anti-Compound-Anschluss bereitgestellten Druck an der Hauptventileinheit auszusteuern.

Ein Anti-Compound-Anschluss wird insbesondere dazu verwendet, eine Überlastung von Bremsaktuatoren zu vermeiden. An den Federspeicheranschluss werden bei den meisten Bremssystemen sogenannte Tristop-Zylinder angeschlossen, die sowohl als Betriebsbremszylinder als auch als Parkbremszylinder wirken können. Wird nun der Federspeicherteil des Tristop-Zylinders entlüftet, um die Feststellbremsfunktion zu aktivieren, kann es vorkommen, dass auch der Betriebsbremsteil des Tristop-Zylinders aktiviert wird, wenn beispielsweise ein Bediener des Fahrzeugs ein Bremspedal betätigt. In diesem Fall würden sowohl der Federspeicherteil als auch der Betriebsbremsteil eine Kraft ausüben, was zu einer Überlastung von Bauteilen führen kann. Bei einer sogenannten Anti-Compound-Funktion wird der an dem Tristop-Zylinder ausgesteuerte Betriebsbremsdruck gleichzeitig über den Anti-Compound-Anschluss der Feststellbremseinrichtung zugeführt, die in der Folge einen Parkbremsdruck an dem Federspeicheranschluss aussteuert, um in gleicher Weise den Federspeicherteil des Tristop-Zylinders zu belüften und somit zu lösen. Das heißt, in der gleichen Weise, in der der Betriebsbremsteil eine Kraft ausübt, wird eine Kraft, die durch den Federspeicherteil ausgeübt wird, reduziert.

Bevorzugt ist ferner, dass die Bypass-Abzweigleitung zwischen dem ersten Wechselventilanschluss und der Vorsteuerventileinheit abzweigt. Das Bypass-ventil soll so ausgebildet sein, dass es den Parkbremssteuerdruck entlüften kann, und nicht den Anti-Compound-Druck, der an dem Anti-Compound-Anschluss bereitgestellt wird. Die Anti-Compound-Funktion bleibt also unabhängig von der Schaltung des Bypassventils bestehen.

In einer bevorzugten Ausführungsform ist ferner vorgesehen, dass die Parkbremsventileinheit ein Kompensationsventil aufweist, welches dazu vorgesehen ist, einen von der Vorsteuerventileinheit an der Hauptventileinheit ausgesteuerten Parkbremssteuerdruck aufrechtzuerhalten und so eine Leckage der Vorsteuerventileinheit und/oder der Hauptventileinheit wenigstens teilweise auszugleichen. Durch das Kompensationsventil können vorteilhaft Leckagen kompensiert werden, die in der Vorsteuerventileinheit und/oder der Hauptventileinheit auftreten. Dies wird vorteilhaft durch eine steuerbare pneumatische Verbindung zu dem Parkbrems-Vorrat oder zu einem Entlüftungsanschluss ermöglicht, die durch das Kompensationsventil herstellbar ist.

Das Kompensationsventil ist vorzugsweise als pneumatisch schaltbares 3/2-Wege-Ventil ausgebildet und weist einen mit dem Rückschlagventil verbundenen ersten Kompensationsventilanschluss, einen mit einer den Parkbremssteuerdruck führenden Leitung verbundenen zweiten Kompensationsventilanschluss und einen mit einer Entlüftung verbundenen dritten Kompensationsventilanschluss auf. Vorzugsweise ist das Kompensationsventil federbelastet in eine erste Schaltstellung vorgespannt, in der der zweite Kompensationsventilanschluss mit dem dritten Kompensationsventilanschluss verbunden ist und falls ein an einem Kompensationsventil-Steueranschluss bereitgestellte Kompensationsventil-Steuerdruck einen Kompensationsventil-Schwellwert überschreitet, in eine zweite Schaltstellung schaltet, in welcher der erste Kompensationsventilanschluss mit dem zweiten Kompensationsventilanschluss verbunden ist. Weiter ist bevorzugt, dass der Kompensationsventil-Steuerdruck ein am zweiten Kompensationsventilanschluss anliegender oder ausgesteuerter Druck ist, wodurch eine pneumatische Selbsthaltung für das Kompensationsventil realisiert wird. Vorzugsweise weist das Kompensationsventil eine Rückstellfeder auf, die das Kompensationsventil in die erste Schaltstellung vorspannt. Vorteilhaft ist das Kompensationsventil, insbesondere durch Auslegung einer oder der Rückstellfeder, ausgebildet, in die zweite Schaltstellung zu schalten, wenn der Kompensationsventil-Schwellwert überschritten wird. Vorteilhaft liegt der Kompensationsventil-Schwellwert in einem Bereich von 0,241 MPa (35 psi) und 0,379 MPa (55 psi), bevorzugt von 0,276 MPa (40 psi) bis 0,345 MPa (50 psi), und beträgt vorzugsweise 0,310 MPA (45 psi).

Vorteilhaft ist vorgesehen, dass der zweite Kompensationsventilanschluss über einen Kompensationssteuerpfad pneumatisch mit dem Kompensationsventil-Steueranschluss verbunden ist.

In einer vorteilhaften Weiterbildung ist vorgesehen, dass das Kompensationsventil gedrosselt ausgebildet ist, bevorzugt derart, dass die Verbindung des ersten Kompensationsventilanschlusses mit dem zweiten Kompensationsventilanschluss und/oder die Verbindung des zweiten Kompensationsventilanschlusses mit dem dritten Kompensationsventilanschluss jeweils gedrosselt ist. Insbesondere weist das Kompensationsventil eine erste Drossel zum Drosseln der pneumatischen Verbindung zwischen dem ersten Kompensationsventilanschluss und dem zweiten Kompensationsventilanschluss in der zweiten Schaltstellung auf. Insbesondere weist das zweite Kompensationsventil eine zweite Drossel zum Drosseln der pneumatischen Verbindung zwischen dem zweiten Kompensationsventilanschluss und dem dritten Kompensationsventilanschluss in der ersten Schaltstellung auf. In anderen Weiterbildungen kann eine gemeinsame Drossel vorgesehen werden, die unabhängig von der Schaltstellung des Kompensationsventils ist und dem Kompensationsventil vor- oder nachgeschaltet ist. Vorteilhaft kann eine derartige gemeinsame Drossel zwischen dem zweiten Kompensationsventilanschluss und einem Abzweigknoten für den Kompensationssteuerpfad angeordnet sein. In einer besonders bevorzugten Ausgestaltung ist vorgesehen, dass die Parkbremsventileinheit und das Bypassventil von zwei unabhängigen Spannungsquellen mit elektrischer Spannung versorgt werden. Vorzugsweise wird auch die weitere elektronische Steuereinheit von der Spannungsquelle versorgt, die auch das Bypassventil versorgt. Auf diese Weise kann die Sicherheit erhöht werden und in einem Bremssystem, welches zwei unabhängige Spannungsquellen aufweist, ein Fail-Operational-Betrieb ermöglicht werden.

In einem zweiten Aspekt löst die Erfindung die eingangs genannte Aufgabe bei einem elektronisch steuerbaren pneumatischen Bremssystem dadurch, dass dieses eine elektropneumatische Feststellbremseinrichtung nach einer der vorstehend beschriebenen bevorzugten Ausführungsformen einer elektropneumatischen Feststellbremseinrichtung gemäß dem ersten Aspekt der Erfindung aufweist, wobei an den wenigstens einen Federspeicheranschluss wenigstens ein erster Federspeicherzylinder an der Hinterachse angeschlossen ist und wobei das Bypassventil zum Belüften und zum Entlüften des ersten Federspeicherzylinders schaltbar ist, wobei das Bypassventil unabhängig von der Parkbremsventileinheit angesteuert und geschaltet wird.

Es soll verstanden werden, dass die elektropneumatische Feststellbremseinrichtung gemäß dem ersten Aspekt der Erfindung und das elektronisch steuerbare pneumatische Bremssystem gemäß dem zweiten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung Bezug genommen und bevorzugte Ausführungsformen, Merkmale und Vorteile sollen auch im zweiten Aspekt der Erfindung berücksichtigt und durch Bezug einbezogen werden.

In einer bevorzugten Ausführungsform des elektronisch steuerbaren pneumatischen Bremssystems ist vorgesehen, dass die Parkbremsventileinheit mit einer Parkbrems-Steuereinheit verbunden ist und von dieser Schaltsignale empfängt, wobei das Bypassventil mit einer von der Parkbremsventileinheit unabhängigen weiteren Steuereinheit verbunden ist und von dieser wenigstens ein Bypass-Schaltsignal empfängt. Bevorzugt ist die Parkbrems-Steuereinheit mit einer ersten Spannungsquelle verbunden und wird von dieser mit elektrischer Spannung versorgt, und die weitere elektronische Steuereinheit ist mit einer zweiten Spannungsquelle verbunden und wird von dieser mit elektrischer Spannung versorgt. Die weitere elektronische Steuereinheit ist vorzugsweise eine in dem elektronisch steuerbaren pneumatischen Bremssystem vorhandene Steuereinheit, wie beispielsweise die Primär-Steuereinheit. Die Primär-Steuereinheit ist typischerweise unabhängig von der Parkbrems-Steuereinheit. Die Parkbrems-Steuereinheit bildet in manchen Konzepten eine Rückfallebene und insofern auch eine Sekundär-Steuereinheit für die erste Redundanzebene des elektronisch steuerbaren pneumatischen Bremssystems. Für den Fall, dass diese Redundanzebene ausfällt, beispielsweise dadurch, dass die Parkbrems-Steuereinheit ausfällt, kann die Primär-Steuereinheit das Bypassventil ansteuern und so eine Entlüftung der Federspeicherbremszylinder oder auch eine Belüftung der Federspeicherbremszylinder herbeiführen. Für den Fall, dass die Parkbremsventileinheit der Primär-Steuereinheit zugeordnet ist, wird das Bypassventil vorzugsweise von einer anderen Steuereinheit wie beispielsweise einer anderen Sekundär-Steuereinheit, die unabhängig von der Primär-Steuereinheit bereitgestellt ist, angesteuert.

In einer bevorzugten Weiterbildung des elektronisch steuerbaren pneumatischen Bremssystems weist dieses ferner ein Sekundärsystem mit einer Sekundär-Steuereinheit, wenigstens zum Ansteuern des ersten Vorderachsbremsaktuators, des zweiten Vorderachsbremsaktuators, des ersten Hinterachsbremsaktuators und des zweiten Hinterachsbremsaktuators auf, wobei für den Fall, dass im Primärsystem ein Fehler ermittelt wird, die Steuerung des elektronisch steuerbaren pneumatischen Bremssystems wenigstens teilweise durch das Sekundärsystem erfolgt. Das Sekundärsystem bildet in diesem Fall eine erste Rückfallebene. Es kann vorgesehen sein, dass das Sekundärsystem das Primärsystem vollständig ersetzen kann und insofern auch die Sekundär-Steuereinheit die Funktionalität der Primär-Steuereinheit vollständig ersetzen kann. Es kann auch vorgesehen sein, dass die Sekundär-Steuereinheit nur einen begrenzten Funktionsumfang der Primär-Steuereinheit aufweist und insofern keine vollständige Funktionalität, jedoch eine ausreichende Funktionalität, um insbesondere ein "Limp-Home-Manöver" durchzuführen, vorgesehen ist.

In dieser Variante kann auch vorgesehen sein, dass die Sekundär-Steuereinheit die weitere Steuereinheit, die das Bypassventil ansteuert, bildet oder aufweist. In diesem Fall kann das Bypassventil dann durch die Sekundär-Steuereinheit angesteuert werden, für den Fall, dass die Primär-Steuereinheit nicht oder nicht richtig funktioniert und auch die Parkbrems-Steuereinheit nicht oder nicht richtig funktioniert.

Auch andere Steuereinheiten, wie beispielsweise eine Steuereinheit eines elektronischen Lenksystems, eine Steuereinheit eines Anhängersteuermoduls, eine Steuereinheit einer Luftfederung oder weitere Steuereinheiten können bevorzugt im Rahmen der Erfindung als weitere Steuereinheiten zum Ansteuern des Bypassventils vorgesehen sein. Hierzu ist es dann jeweils bevorzugt, dass die jeweilige Steuereinheit an ein BUS-System angeschlossen ist, oder so mit einer übergeordneten Steuereinheit kommuniziert, dass die weitere Steuereinheit in der Lage ist, Schaltsignale für das Bypassventil auszusteuern.

In einem dritten Aspekt wird die eingangs genannte Aufgabe gelöst durch ein Fahrzeug, insbesondere Nutzfahrzeug, mit einer Vorderachse, wenigstens einer ersten Hinterachse und einem elektronisch steuerbaren pneumatischen Bremssystem nach einer vorstehend beschriebenen bevorzugten Ausführungsform des elektronisch steuerbaren pneumatischen Bremssystems gemäß dem zweiten Aspekt der Erfindung. Es soll verstanden werden, dass das Fahrzeug gemäß dem dritten Aspekt der Erfindung, das elektronisch steuerbare pneumatische Bremssystem gemäß dem zweiten Aspekt der Erfindung und die elektropneumatische Feststellbremseinrichtung gemäß dem ersten Aspekt der Erfindung gleiche und/oder ähnliche Unteraspekte aufweisen, wie sie insbesondere in den abhängigen Ansprüchen niedergelegt sind. Insofern wird für Weiterbildungen des Fahrzeugs gemäß dem dritten Aspekt der Erfindung vollumfänglich auf das elektronisch steuerbare pneumatische Bremssystem gemäß dem zweiten Aspekt der Erfindung sowie die elektropneumatische Feststellbremseinrichtung gemäß dem ersten Aspekt der Erfindung verwiesen.

In einem vierten Aspekt der Erfindung wird die eingangs genannte Aufgabe auch gelöst durch ein Verfahren zum Steuern eines elektronisch steuerbaren pneumatischen Bremssystems, vorzugsweise ein elektronisch steuerbares pneumatisches Bremssystem gemäß einer der vorstehend beschriebenen bevorzugten Ausführungsformen gemäß dem zweiten Aspekt der Erfindung. Das Verfahren weist vorzugsweise die Schritte auf: Ansteuern einer Parkbremsventileinheit mittels einer Parkbrems-Steuereinheit zum Be- und Entlüften von wenigstens einem Federspeicherbremszylinder an einer Hinterachse eines Nutzfahrzeugs, wobei die Parkbremsventileinheit über ein Rückschlagventil mit einem Parkbrems-Vorrat verbunden ist und von diesem Vorratsdruck empfängt; Ermitteln eines Fehlers in dem elektronisch steuerbaren pneumatischen Bremssystem, insbesondere der Parkbrems-Steuereinheit oder/oder der Parkbremsventileinheit; Schalten eines Bypassventils, welches sowohl mit dem wenigstens einen Federspeicherbremszylinder als auch dem Parkbrems-Vorrat verbunden ist, in eine Entlüftungsstellung zum Entlüften des wenigstens einen Federspeicherbremszylinders; wobei das Bypassventil in Antwort auf ein Bypass-Schaltsignal schaltet, welches von einer weiteren elektronischen Steuereinheit bereitgestellt wird, die unabhängig von der Parkbrems-Steuereinheit ist.

Es soll verstanden werden, dass die elektropneumatische Feststellbremseinrichtung gemäß dem ersten Aspekt der Erfindung, das elektronisch steuerbare pneumatische Bremssystem gemäß dem zweiten Aspekt der Erfindung, das Fahrzeug gemäß dem dritten Aspekt der Erfindung und das Verfahren zum Steuern eines elektronisch steuerbaren pneumatischen Bremssystems gemäß dem vierten Aspekt der Erfindung gleiche und ähnliche Unteraspekte aufweisen, wie sie insbesondere in den abhängigen Ansprüchen niedergelegt sind. Insofern wird für Weiterentwicklungen des Verfahrens zum Steuern eines elektronisch steuerbaren pneumatischen Bremssystems auf die weiteren Ausführungsformen, Vorteile und Merkmale der ersten drei Aspekte der Erfindung vollumfänglich verwiesen.

In einer bevorzugten Weiterbildung des Verfahrens ist vorgesehen, dass die Parkbrems-Steuereinheit mit einer ersten Spannungsquelle verbunden ist und von dieser mit elektrischer Spannung versorgt wird und die weitere Steuereinheit mit einer zweiten Spannungsquelle verbunden ist und von dieser mit elektrischer Spannung versorgt wird.

Vorzugsweise umfasst das Verfahren ferner den Schritt: Absenken des Vorratsdrucks im Parkbrems-Vorrat zum Entlüften des wenigstens einen Federspeicherbremszylinders.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein erstes Ausführungsbeispiel einer elektropneumatischen Feststellbremseinrichtung;
- Fig. 2: ein Nutzfahrzeug mit einem elektronisch steuerbaren pneumatischen Bremssystem sowie einer elektropneumatischen Feststellbremseinrichtung;
- Fig. 3: ein zweites Ausführungsbeispiel einer elektropneumatischen Feststellbremseinrichtung;
- Fig. 4: ein drittes Ausführungsbeispiel einer elektropneumatischen Feststellbremseinrichtung;
- Fig. 5: ein zweites Ausführungsbeispiel eines Nutzfahrzeugs mit einem elektronisch steuerbaren pneumatischen Bremssystem sowie einer elektropneumatischen Feststellbremseinrichtung;
- Fig. 6: ein viertes Ausführungsbeispiel einer elektropneumatischen Feststellbremseinrichtung; und in
- Fig. 7: ein fünftes Ausführungsbeispiel einer elektropneumatischen Feststellbremseinrichtung.

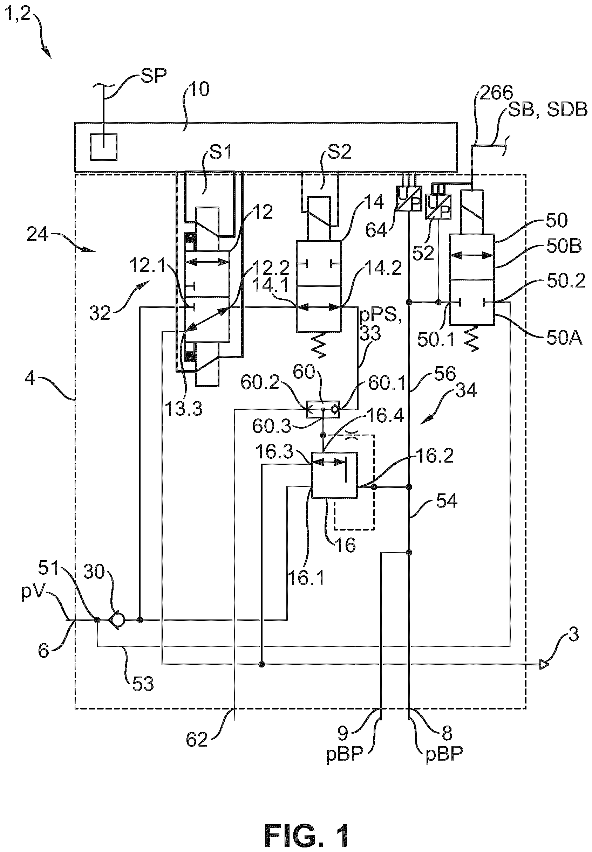

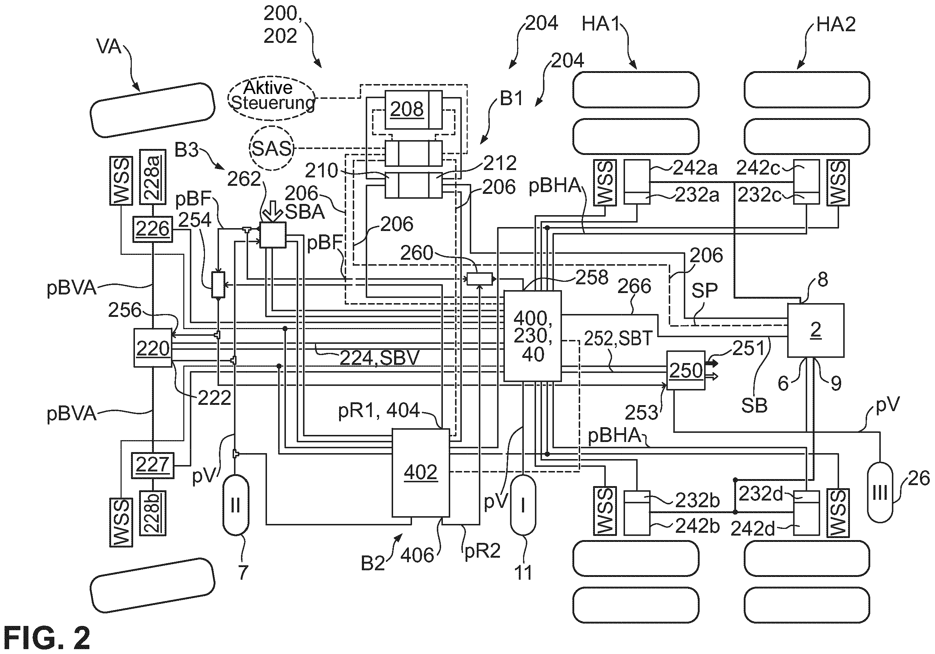

Eine elektropneumatische Feststellbremseinrichtung 1 kann in einer ersten Ausführungsform (Fig. 1) als Feststellbremsmodul 2 ausgebildet sein. Dazu weist es ein Modulgehäuse 4 auf, an welchem ein Vorratsanschluss 6, ein Entlüftungsanschluss 3 sowie ein erster Federspeicheranschluss 8 und ein zweiter Federspeicheranschluss 9 angeordnet sind. Die elektropneumatische Feststellbremseinrichtung 1 umfasst daneben eine Parkbrems-Steuereinheit 10 sowie eine Parkbremsventileinheit 24, die von der Parkbrems-Steuereinheit 10 angesteuert wird. Die Parkbremsventileinheit 24 ist im Grunde wie im Stand der Technik bekannt gebildet und sowohl mit dem Vorratsanschluss 6 verbunden als auch den ersten und zweiten Federspeicheranschlüssen 8, 9. Die Parkbremsventileinheit 24 empfängt von dem Vorratsanschluss 6 Vorratsdruck pV und steuert abhängig vom ersten und zweiten Schaltsignal S1, S2, die von der Parkbrems-Steuereinheit 10 bereitgestellt werden, einen Parkbremsdruck pBP an dem ersten und zweiten Federspeicheranschluss 8, 9 aus. Die ersten und zweiten Schaltsignale S1, S2 werden von der Parkbrems-Steuereinheit 10 basierend auf dem Empfang eines Parkbremssignals SP bereitgestellt. Das Parkbremssignal SP wird von einer übergeordneten Einheit, wie nachfolgend mit Bezug auf Fig. 2 näher beschrieben werden wird, bereitgestellt. Es kann auch vorgesehen sein, dass das Parkbremssignal SP unmittelbar an der Parkbremsventileinheit 24 bereitgestellt wird und insofern die elektropneumatische Feststellbremseinrichtung 1 keine eigene Parkbrems-Steuereinheit 10 aufweist, sondern direkt verkabelt ist.

Konkret weist die Parkbremsventileinheit 24 in dem hier gezeigten Ausführungsbeispiel eine Vorsteuerventileinheit 32 und eine Hauptventileinheit 34 auf, wie im Grunde bekannt. Die Vorsteuerventileinheit 32 umfasst in dem hier gezeigten Ausführungsbeispiel ein Bistabilventil 12, mit einem ersten Bistabilventilanschluss 12.1, der mit dem Vorratsanschluss 6 verbunden ist, einem zweiten Bistabilventilanschluss 12.2 und einem dritten Bistabilventilanschluss 12,3, der mit dem Entlüftungsanschluss 3 verbunden ist. Genauer gesagt ist der erste Bistabilventilanschluss 12.1 zunächst mit einem Rückschlagventil 30 verbunden, welches hier in das Modulgehäuse 4 integriert ist und der Parkbremsventileinheit 24 vorgeschaltet ist. Das Rückschlagventil 30 dient dazu, dass Druck nicht von der Parkbremsventileinheit 24 in Richtung des Vorratsanschlusses 6 strömen kann. Vorratsdruck pV wird also nur von dem Vorratsdruck 6 über das Rückschlagventil 30 dem ersten Bistabilventilanschluss 12.1 bereitgestellt, aber ein Druckausgleich kann nicht umgekehrt stattfinden.

Der zweite Bistabilventilanschluss 12.2 ist hier mit einem Halteventil 14 verbunden, welches als 2/2-Wege-Ventil ausgebildet ist. Das Halteventil 14 weist einen ersten Halteventilanschluss 14.1 sowie einen zweiten Halteventilanschluss 14.2 auf. Das Halteventil 14 ist als 2/2-Wege-Ventil ausgebildet und monostabil. Es ist in einer Öffnungsstellung vorgespannt und kann durch Bereitstellen des zweiten Schaltsignals S2 in eine Sperrstellung (in Fig. 1 nicht gezeigt) gebracht werden. Der erste Halteventilanschluss 14.1 ist mit dem Bistabilventil 12 verbunden, genauer gesagt mit dem zweiten Bistabilventilanschluss 12.2. Der zweite Halteventilanschluss 14.2 ist mit der Hauptventileinheit 34 verbunden. Das Bistabilventil 12 und das Halteventil 14 bilden zusammen die Vorsteuerventileinheit 32. Es soll verstanden werden, dass das Halteventil 14 auch entfallen kann. Die Vorsteuerventileinheit 32 steuert bei entsprechender Schaltung des Bistabilventils 12 und des Halteventils 14 einen Parkbremssteuerdruck pPS an der Hauptventileinheit 34 aus. Die Hauptventileinheit 34 umfasst in dem hier gezeigten Ausführungsbeispiel ein Relaisventil 16, das einen mit dem Vorratsanschluss 6 verbundenen Relaisventil-Vorratsanschluss 16.1, einen mit dem ersten und zweiten Federspeicheranschluss 8, 9 verbundenen Relaisventil-Arbeitsanschluss 16.2, einen mit dem Entlüftungsanschluss 3 verbundenen Relaisventil-Entlüftungsanschluss 16.3 sowie einen mit der Vorsteuerventileinheit 32 verbundenen Relaisventil-Steueranschluss 16.4 aufweist. Die Vorsteuerventileinheit 32 stellt den Parkbremssteuerdruck pPS an dem Relaisventil-Steueranschluss 16.4 bereit, wobei das Relaisventil 16 dann den Parkbremssteuerdruck pPS volumenverstärkt und als Parkbremsdruck pBP an dem Relaisventil-Arbeitsanschluss 16.2 aussteuert. Zu diesem Zweck empfängt das Relaisventil 16 den Vorratsdruck pV von dem Vorratsanschluss 6. Es soll verstanden werden, dass statt des Relaisventils 16 auch andere volumenverstärkende Ventile, wie beispielsweise ein pneumatisches Schaltventil, eingesetzt werden können.

In dem konkret in Fig. 1 gezeigten Ausführungsbeispiel ist zwischen dem Halteventil 14 und dem Relaisventil 16 noch ein Wechselventil 60 vorgesehen. Das Wechselventil 60 weist einen ersten Wechselventilanschluss 60.1 auf, der hier konkret mit der Vorsteuerventileinheit 32, nämlich insbesondere dem zweiten Halteventilanschluss 14.2, verbunden ist. Das Wechselventil 60 weist einen zweiten Wechselventilanschluss 60.2 auf, der hier mit einem Anti-Compound-Anschluss 62 verbunden ist, sowie einen dritten Wechselventilanschluss 60.3, der mit dem Relaisventil-Steueranschluss 16.4 verbunden ist. Das Wechselventil 60 ist so ausgebildet, dass der jeweils höhere des am ersten Wechselventilanschluss 60.1 und zweiten Wechselventilanschluss 60.2 anliegende Druck am dritten Wechselventilanschluss 60.3 ausgesteuert wird. Sowohl das Wechselventil 60 als auch der Anti-Compound-Anschluss 62 sind optional und können gemeinsam entfallen.

Durch entsprechendes Bereitstellen des Parkbremssignals SP kann also der Parkbremsdruck pBP an den ersten und zweiten Federspeicheranschlüssen 8, 9 ausgesteuert oder diese entlüftet werden. In der Folge können die Federspeicherbremszylinder, die an den ersten bzw. zweiten Federspeicheranschluss 8, 9 angeschlossen sind, gelöst oder zugespannt werden. Im abgestellten Zustand des Fahrzeugs sollten Federspeicherbremszylinder stets zugespannt sein, sodass ein unbeabsichtigtes Wegrollen des Fahrzeugs verhindert werden kann. Bei der Fahrt allerdings sind die Federspeicherbremszylinder gelöst und belüftet. Tritt nun ein Fehler des Parkbremssystems auf und insbesondere ein Fehler der Parkbrems-Steuereinheit 10 oder der Vorsteuerventileinheit 32, hat sich in der Praxis als eine Problemlösestrategie, um die Federspeicherbremszylinder bzw. den ersten und zweiten Federspeicheranschluss 8, 9 zu entlüften und in der Folge die Federspeicherbremszylinder zuzuspannen, erwiesen, den entsprechenden am Vorratsanschluss 6 angeschlossenen Parkbrems-Vorrat zu entleeren, in der Fachsprache als "Herunterpumpen" bekannt. Ist nun allerdings wie im vorliegenden Fall ein Rückschlagventil 30 vorgesehen, kann auch durch einen heruntergepumpten Parkbrems-Vorrat kein Entlüften der ersten und zweiten Federspeicheranschlüsse 8, 9 erreicht werden, da ein Druckausgleich von der Parkbremsventileinheit 24 in Richtung des Vorratsanschlusses 6 durch das Rückschlagventil 30 verhindert wird. Hier setzt die Erfindung an und löst dieses Problem durch ein Bypassventil 50. Das Bypassventil 50 bildet einen Bypass zur Parkbremsventileinheit 24 und ist in dem in Fig. 1 gezeigten ersten Ausführungsbeispiel in das Modulgehäuse 4 integriert und somit zusammen mit der Parkbremsventileinheit 24 als Modul dargestellt.

Das Bypassventil 50 ist in dem ersten Ausführungsbeispiel als 2/2-Wege-Ventil ausgebildet und hat einen ersten Bypassventilanschluss 50.1, der mit den ersten und zweiten Federspeicheranschlüssen 8, 9 verbunden ist. Konkret ist der erste Bypassventilanschluss 50.1 mit einer Bypassabzweigleitung 56 verbunden, die von einer Parkbremsdruckleitung 54 abzweigt, die die ersten und zweiten Federspeicheranschlüsse 8, 9 mit dem Relaisventil-Arbeitsanschluss 16.2 verbindet. Der zweite Bypassventilanschluss 50.2 ist mit dem Vorratsanschluss 6 verbunden, konkret mit einem Bypassvorratsknoten 51, der in dem in Fig. 1 gezeigten Ausführungsbeispiel zwischen dem Vorratsanschluss 6 und dem Rückschlagventil 30 liegt. Der Bypassvorratsknoten ist mit einer Bypassvorratsleitung 53 verbunden, die zum zweiten Bypassventilanschluss 50.2 führt. Das Bypassventil 50 ist in einer ersten Schaltstellung 50A in einer Sperrstellung und in einer zweiten Schaltstellung 50B in einer Durchlassstellung. Stromlos ist das Bypassventil 50 in der Sperrstellung 50A und auch federbelastet in diese Stellung vorgespannt. Sobald ein Bypass-Schaltsignal SB an dem Bypassventil 50 bereitgestellt wird, wird dieses bestromt und in die in Fig. 1 nicht gezeigte Durchlassstellung 50B geschaltet. In der Durchlassstellung 50B ist der erste mit dem zweiten Bypassventilanschluss 50.1, 50.2 verbunden und Vorratsdruck pV kann über die Bypassvorratsleitung 53, das Bypassventil 50 sowie die Bypassabzweigleitung 56 und die Parkbremsdruckleitung 54 an den ersten und zweiten Federspeicheranschlüssen 8, 9 bereitgestellt werden, sodass die an diese angeschlossenen Federspeicherbremszylinder belüftet werden können. Wird allerdings der an den Vorratsanschluss 6 angeschlossene Parkbrems-Vorrat entleert bzw. heruntergepumpt, können durch Schalten des Bypassventils 50 in die Durchlassstellung 50B die ersten und zweiten Federspeicheranschlüsse 8, 9 entlüftet werden, indem diese über das Bypassventil 50 mit dem entlüfteten Vorratsanschluss 6 pneumatisch verbunden werden. Das Bypass-Schaltsignal SB wird wie in Fig. 1 gezeigt nicht von der Parkbrems-Steuereinheit 10 bereitgestellt, sondern an einer weiteren elektronischen Steuereinheit, die unabhängig von der Parkbrems-Steuereinheit 10 ist, wie im Weiteren genauer beschrieben werden wird. Auf diese Weise können auch bei einem Fehler der Parkbrems-Steuereinheit 10 die ersten und zweiten Federspeicheranschlüsse 8, 9 sowohl ent- als auch belüftet werden.

Ein Bypassdrucksensor 52 misst den Druck, der am ersten Bypassventilanschluss 50.1 anliegt, also den an den ersten und zweiten Federspeicheranschlüssen 8, 9 ausgesteuerten Druck. Der Bypassdrucksensor 52 stellt ein Bypassdrucksignal SDB bereit, allerdings nicht an der Parkbrems-Steuereinheit 10, sondern ebenfalls an der weiteren elektronischen Steuereinheit, die auch das Bypass-Schaltsignal SB bereitstellt. Auf diese Weise kann eine Regelung des an den ersten und zweiten Federspeicheranschlüssen 8, 9 ausgesteuerten Drucks erreicht werden, wenn dieser Druck über das Bypassventil 50 ausgesteuert wird.

Fig. 2 illustriert nun ein Fahrzeug 200, nämlich insbesondere Nutzfahrzeug 202, mit einer ersten Achse A1, die hier eine Vorderachse VA ist, einer zweiten Achse A2, die hier eine erste Hinterachse HA1 ist sowie einer dritten Achse A3, die hier eine zweite Hinterachse HA2 ist. Das Fahrzeug 200 umfasst ein elektronisch steuerbares pneumatisches Bremssystem 204, welches eine Betriebsebene B1 und eine erste Redundanzebene B2 umfasst.

In der Betriebsebene B1 umfasst das elektronisch steuerbare pneumatische Bremssystem 204 eine Primär-Steuereinheit 400, auch als Zentralmodul bezeichnet, die über einen Fahrzeug-BUS 206 mit einer Einheit für autonomes Fahren 208 verbunden ist und von dieser Bremsanforderungssignale SBA empfängt. Das elektronisch steuerbare pneumatische Bremssystem 204 umfasst zwei unabhängige Spannungsquellen, nämlich eine erste Spannungsquelle 212 und eine zweite Spannungsquelle 210, wobei die erste Spannungsquelle die elektropneumatische Feststellbremseinrichtung 1 versorgt, wie später im Detail beschrieben. Die Primär-Steuereinheit 400 wird von einer zweiten Spannungsquelle 210 mit elektrischer Energie versorgt.

An der Vorderachse VA umfasst das elektronisch steuerbare pneumatische Bremssystem 204 einen Vorderachsmodulator 220, der hier als Einkanalmodulator ausgebildet ist und Vorratsdruck pV von einem ersten Druckluftvorrat 7 empfängt. Zu diesem Zweck umfasst der Vorderachsmodulator 220 in bekannter Weise einen Vorderachs-Vorratsanschluss 222, der mit dem ersten Druckluftvorrat 7 verrohrt ist. Der Vorderachsmodulator 220 ist über eine Vorderachssignalleitung 224 mit der Primär-Steuereinheit 400 verbunden und empfängt von dieser Vorderachsbremssignale SBV, die ein Schalten von einem oder mehreren elektromagnetischen Ventilen (nicht gezeigt) des Vorderachsmodulators 220 veranlassen, wobei infolgedessen der Vorderachsmodulator 220 einen Vorderachsbetriebsbremsdruck pBVA aussteuert, der über erste und zweite ABS-Ventile 226, 227 radgerecht an einem ersten Vorderachsbetriebsbremsaktuator 228a und einem zweiten Vorderachsbetriebsbremsaktuator 228b ausgesteuert wird. Die Vorderachssignalleitung 224 kann sowohl als direkte Verkabelung der elektromagnetischen Ventile des Vorderachsmodulators 220 mit der Primär-Steuereinheit 400 umgesetzt sein, sodass vorzugsweise in die zentrale Steuereinheit 400 Endstufen für elektromagnetische Ventile des Vorderachsmodulators 220 integriert sind. Alternativ dazu kann die Vorderachssignalleitung 224 auch als BUS-Verbindung (CAN-BUS) ausgebildet sein, insbesondere dann, wenn der Vorderachsmodulator 220 über eine eigene Intelligenz verfügt.

Das elektronisch steuerbare pneumatische Bremssystem 204 umfasst auch einen Hinterachsmodulator 230, der hier in die Primär-Steuereinheit 400 integriert ist. Der Hinterachsmodulator 230 empfängt Vorratsdruck pV von einem zweiten Druckluftvorrat 11. Die Primär-Steuereinheit 400 setzt die über den Fahrzeug-BUS 206 empfangenen Bremsanforderungssignale SBA in Hinterachsbremssignal SBH um und schaltet ein oder mehrere hier nicht im Detail gezeigte elektromagnetische Ventile des Hinterachsmodulators 230, sodass ein Hinterachsbetriebsbremsdruck pBHA erzeugt wird, der an ersten und zweiten Hinterachsbetriebsbremsaktuatoren 232a, 232b an der ersten Hinterachse HA1 sowie an dritten und vierten Hinterachsbetriebsbremsaktuatoren 232c, 232d an der zweiten Hinterachse HA2 ausgesteuert wird. Der Hinterachsbetriebsbremsdruck pBHA wird hier seitengerecht ausgesteuert und insofern ist der Hinterachsmodulator 230 ein Zweikanalmodulator.

Zusätzlich umfasst das hier gezeigte elektronisch steuerbare pneumatische Bremssystem 204 eine elektropneumatische Feststellbremseinrichtung 1 gemäß der Erfindung, die hier als Feststellbremsmodul 2 ausgebildet ist und ebenfalls mit dem Fahrzeug-BUS 206 verbunden ist sowie der ersten Spannungsquelle 212 und von dieser elektrische Energie empfängt. Die elektropneumatische Feststellbremseinrichtung 1 ist mit einem Parkbrems-Vorrat 26 verbunden und empfängt von diesem Vorratsdruck pV. Die elektropneumatische Feststellbremseinrichtung 1 ist dazu vorgesehen, einen Parkbremsdruck pBP über die ersten und zweiter Federspeicheranschlüsse 8, 9 an ersten und zweiten Federspeicherbremszylindern 242a, 242b an der ersten Hinterachse HA1 sowie dritten und vierte Federspeicherbremszylindern 242c, 242d an der zweiten Hinterachse HA2 auszusteuern.

Das elektronisch steuerbare pneumatische Bremssystem 204 ist auch zum Versorgen eines Anhängers vorgesehen und weist hierzu eine Anhängersteuereinheit 250 auf, die ebenfalls Vorratsdruck pV sowohl von dem ersten Druckluftvorrat 6 als auch von dem zweiten Druckluftvorrat 7 empfängt. Die Anhängersteuereinheit 250 ist mit der Primär-Steuereinheit 400 verbunden und empfängt von dieser über eine Anhängersignalleitung 252 Anhängerbremssignale SBT. Insofern wird auch die Anhängersteuereinheit 250 von der ersten Spannungsquelle 210 versorgt. In Abhängigkeit von dem empfangenen Anhängerbremssignal SBT steuert die Anhängersteuereinheit 250 einen Anhängerbremsdruck pBT an einem Anhängerbremsdruckanschluss 251 aus. Über das Anhängerbremssignal SBT kann beispielsweise ein normales Betriebsbremssignal übergeben werden, ein Streckbremssignal zum Umsetzen einer Streckbremsfunktion, oder ein Anhängerparksignal zum Parken des Anhängers.

Zum Ausbilden einer ersten Redundanzebene B2, die in diesem Fall elektrisch ausgebildet ist, umfasst das elektronisch steuerbare pneumatische Bremssystem 204 eine Sekundär-Steuereinheit 402, in welche auch ein oder mehrere hier nicht gezeigte elektromagnetische Ventile integriert sind. Die Sekundär-Steuereinheit 402 ist mit dem ersten Druckluftvorrat 7 verbunden und empfängt Vorratsdruck pV von diesem. Die Sekundär-Steuereinheit 402 ist ebenfalls an den Fahrzeug-BUS 206 angebunden und empfängt über diesen Bremsanforderungssignale SBA. Sie wird in dem hier gezeigten Ausführungsbeispiel ebenso wie die elektropneumatische Feststellbremseinrichtung 1 von der ersten Spannungsquelle 212 versorgt, die unabhängig von der zweiten Spannungsquelle 210 ist. Die Sekundär-Steuereinheit 402 ist dazu in der Lage, die Bremsanforderungssignale SBA zu verarbeiten und eine in diese integrierte Arbeitsventilanordnung anzusteuern, um einen ersten Redundanzbremsdruck pR1 an einem ersten Redundanzbremsdruckanschluss 404 auszusteuern sowie einen zweiten Redundanzbremsdruck pR2 an einem zweiten Redundanzbremsdruckanschluss 406 auszusteuern. Der erste Redundanzbremsdruck pR1 wird hier der Vorderachse VA bereitgestellt und der zweite Redundanzbremsdruck pR2 wir hier der Hinterachse HA1, HA2 bereitgestellt. Genauer gesagt wird der erste Redundanzbremsdruck pR1 in im Grunde bekannter Weise über ein Vorderachs-Wechselventil 254 an einem Vorderachsredundanzanschluss 256 des Vorderachsmodulators 220 ausgesteuert. Der Vorderachsmodulator 220 setzt dann den an diesem empfangenen ersten Redundanzbremsdruck pR1 um und steuert basierend hierauf den Vorderachsbremsdruck pBVA redundant aus. Zu diesem Zweck kann der Vorderachsmodulator 220 in im Grunde bekannter Weise ein monostabiles Redundanzventil sowie einen Relaiskolben oder ein pneumatisch schaltbares Hauptventil aufweisen, um den am Vorderachsredundanzanschluss 256 bereitgestellten ersten Redundanzbremsdruck pR1 volumenverstärkt auszusteuern. Der erste Redundanzbremsdruck pR1 wird auch an einem Anhängerredundanzanschluss 253 ausgesteuert, um so eine redundante Bremsung eines Anhängers zu ermöglichen.

In übereinstimmender Weise weist der Hinterachsmodulator 230 bzw. die Primär-Steuereinheit 400, in die der Hinterachsmodulator 230 integriert ist, einen Hinterachsredundanzanschluss 258 auf, an dem über ein Hinterachs-Wechselventil 260 der zweite Redundanzbremsdruck pR2 bereitgestellt werden kann. Die Sekundär-Steuereinheit 402 steuert also den ersten und den zweiten Redundanzbremsdruck pR1, pR2 achsengerecht aus und kann somit als Zweikanalmodulator bezeichnet werden. Die Primär-Steuereinheit 400 ist dazu ausgebildet, basierend auf dem empfangenen zweiten Redundanzbremsdruck pR2 den Hinterachsbremsdruck pBHA auszusteuern. Zu diesem Zweck kann die Primär-Steuereinheit 400 wiederum in im Grunde bekannter Weise ein Redundanzventil sowie einen Relaiskolben oder ein pneumatisch schaltbares Hauptventil aufweisen, um den zweiten Redundanzbremsdruck pR2 volumenverstärkt als Hinterachsbremsdruck pBHA auszusteuern. Auf diese Weise kann eine elektronisch steuerbare Rückfallebene, in diesem Fall die erste Redundanzebene B2, vorgesehen werden.

Das in Fig. 2 gezeigte elektronisch schaltbare pneumatische Bremssystem 204 weist darüber hinaus eine manuell betätigbare Redundanzebene B3 auf, die in dem hier gezeigten Ausführungsbeispiel ein Fußbremspedal 262 umfasst. Über das Fußbremspedal 262 kann ein Fußbremsdruck pBF sowohl an dem Vorderachs-Wechselventil 254 als auch an dem Hinterachs-Wechselventil 260 ausgesteuert werden. Die Vorder- und Hinterachs-Wechselventile 254, 260 sind jeweils so ausgebildet, dass sie den höheren des anliegenden Fußbremsdrucks pBF und der ersten bzw. zweiten Redundanzdruck pR1, pR2 an den Vorderachsmodulator 220 bzw. Hinterachsmodulator 230 aussteuern. Auf diese Weise kann beispielsweise der ausgesteuerte erste und zweite Redundanzbremsdruck pR1, pR2 durch Betätigen des Fußbremspedals 262 übersteuert werden. Auch umgekehrt kann das sekundäre Bremsmodul 402 den durch einen Fahrer ausgesteuerten Fußbremsdruck pBF übersteuern.

Sowohl im Betriebsfall als auch im Redundanzfall, wenn die Steuerung des elektronisch steuerbaren pneumatischen Bremssystems 204 durch die Sekundär-Steuereinheit 402 übernommen wird, sollte die elektropneumatische Feststellbremseinrichtung 1 bzw. das Feststellbremsmodul 2 funktionieren. Es kann über den Fahrzeug-BUS 206 Parkbremssignale SP empfangen und insofern die Federspeicherbremszylinder 224a - 224d be- und entlüften. Sollte dies nicht möglich sein, kann dies gemäß der Erfindung über das Bypassventil 50 (vgl. Fig. 1) erfolgen. Das Bypassventil 50 ist über eine Bypasssignalleitung 266 mit der Primär-Steuereinheit 400 verbunden, die in dem hier gezeigten Ausführungsbeispiel (Fig. 2) die weitere elektronische Steuereinheit 40 bildet. Die weitere elektronische Steuereinheit 40 kann das Bypasssignal SB bereitstellen, um das Bypassventil 50 zu schalten. Die weitere elektronische Steuereinheit 40 wird von der zweiten Spannungsquelle 210 mit elektrischer Spannung versorgt, sodass das Bypassventil 50 auch dann schaltbar ist, wenn beispielsweise die erste Spannungsquelle 212 ausgefallen ist und infolgedessen die elektropneumatische Feststellbremseinrichtung 1 nicht oder nicht mehr richtig funktioniert, insbesondere die Parkbremsventileinheit 24 und/oder die Parkbrems-Steuereinheit 10 nicht oder nicht richtig funktioniert. In dem hier gezeigten Ausführungsbeispiel (Fig. 2) ist die Sekundär-Steuereinheit 402 mit der ersten Spannungsquelle 212 verbunden. Für den Fall, dass diese beispielsweise mit einer dritten unabhängigen Spannungsquelle verbunden ist, könnte auch die Sekundär-Steuereinheit 402 als weitere elektronische Steuereinheit 40 fungieren. Im Rahmen der Erfindung ist es stets bevorzugt, dass die weitere elektronische Steuereinheit 40, unabhängig von ihrer Verortung im Bremssystem 204, von einer Spannungsquelle versorgt wird, die nicht die Spannungsquelle ist, an der die Parkbremsventileinheit 24 und/oder Parkbrems-Steuereinheit 10 angeschlossen ist. Der Bypasssensor 250 stellt das Bypassdrucksignal SDB auch über die Bypasssignalleitung 266 an der weiteren elektronischen Steuereinheit 40 - hier Primär-Steuereinheit 400 - bereit. Diese kann das Bypassdrucksignal SDB auch über den Fahrzeug-BUS 206 weiteren Einheiten im Bremssystem oder übergeordneten Einheiten bereitstellen.

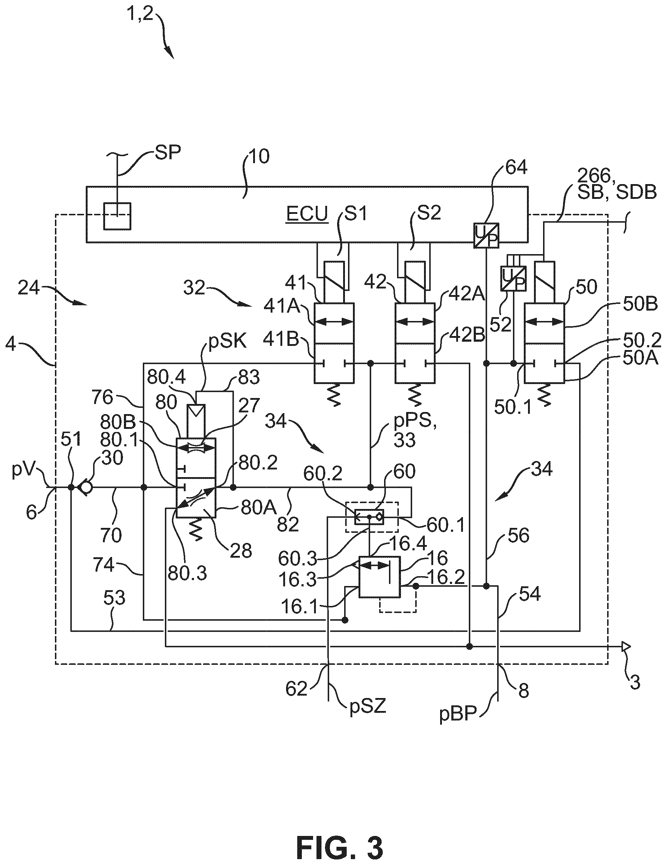

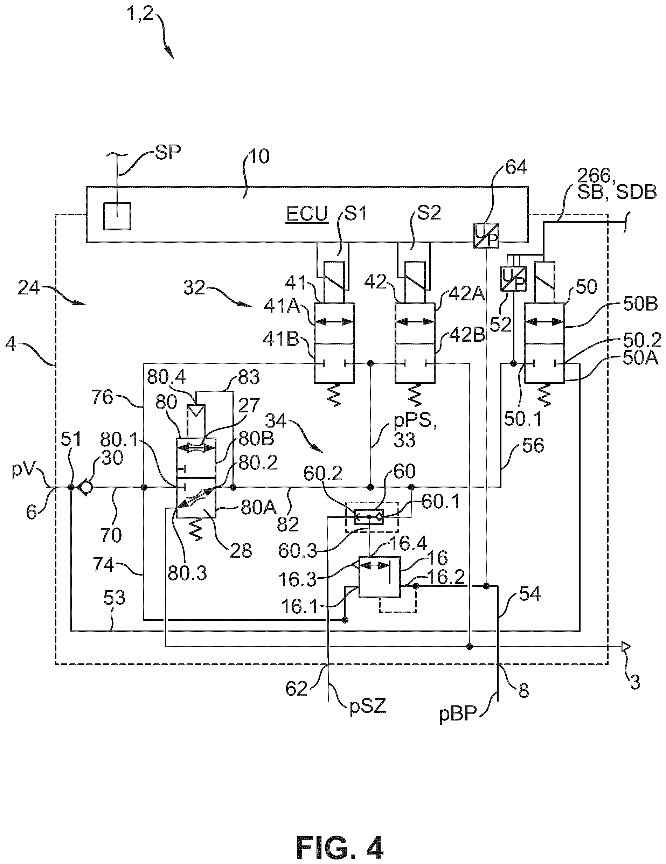

Die Fig. 3 und 4 zeigen nun ein zweites und ein drittes Ausführungsbeispiel der elektropneumatischen Feststellbremseinrichtung 1 gemäß dem ersten Ausführungsbeispiel (Fig. 1), welches wiederum als Feststellbremsmodul 2 ausgebildet ist und wobei das Bypassventil 50 in das Feststellbremsmodul 2 integriert ist, nämlich in ein gemeinsames Modulgehäuse 4. Im Folgenden werden dazu insbesondere die Unterschiede zum ersten Ausführungsbeispiel (Fig. 1) hervorgehoben. Gleiche und ähnliche Elemente sind mit gleichen Bezugszeichen versehen, sodass für diese vollumfänglich auf die obige Beschreibung Bezug genommen wird.

In dem in Fig. 3 gezeigten Ausführungsbeispiel unterscheidet sich die Vorsteuerventileinheit 32 von der Vorsteuerventileinheit 32 gemäß dem ersten Ausführungsbeispiel (Fig. 1). Die weiteren Elemente sind identisch ausgebildet, sodass für diese auf die obige Beschreibung Bezug genommen wird.

Von dem Vorratsanschlus 6 erstreckt sich ein Vorratsdruckpfad 70, der in einen Vorratszweig 74, einen Steuerzweig 76 und einen Kompensationspfad 86 geteilt. Der Kompensationspfad 86 verbindet den Vorratsdruckpfad 70 pneumatisch mit einer Parkbremssteuerdruckleitung 33, die den Parkbremssteuerdruck pPS an der Hauptventileinheit 34 bereitstellt.

In dem Kompensationspfad 82 ist ein Kompensationsventil 80 angeordnet. Das Kompensationsventil 80 ist als 3/2-Wegeventil ausgebildet. Das Kompensationsventil 80 weist einen ersten Kompensationsventilanschluss 80.1 auf, der mit dem Vorratsdruckpfad 70 pneumatisch verbunden ist. Das Kompensationsventil 80 weist einen zweiten Kompensationsventilanschluss 80.2 auf, der pneumatisch mit dem Kompensationspfad 82 verbunden ist. Das Kompensationsventil 80 weist einen dritten Kompensationsventilanschluss 80.3 auf, der pneumatisch mit einer Entlüftungsleitung 44 verbunden ist. Die Entlüftungsleitung 44 ist mit einem Entlüftungsanschluss 3 verbunden, der in die Umgebung entlüftet.

Das Kompensationsventil 80 weist einen Kompensationsventil-Steueranschluss 80.4 auf, der mittels eines Kompensationssteuerpfades 83 pneumatisch mit dem zweiten Kompensationsventilanschluss 80.2 verbunden ist. Mittels des Kompensationssteuerpfades 83 wird bevorzugt eine pneumatische Selbsthaltung realisiert. Über den Kompensationssteuerpfad 83 wird ein am zweiten Kompensationsventilanschluss 80.2 anliegender Druck, insbesondere ein Parkbremssteuerdruck pPS, am Kompensationsventil-Steueranschluss 80.4 bereitgestellt.

In einer zweiten Schaltstellung 80B des Kompensationsventils 80 ist der erste Kompensationsventilanschluss 80.1 pneumatisch mit dem zweiten Kompensationsventilanschluss 80.2 verbunden, und bevorzugt ist der dritte Kompensationsventilanschluss 80.3 gesperrt. In der zweiten Schaltstellung 80B ist somit der Vorratsdruckpfad 70 mit dem Kompensationspfad 82 und somit mit der Parkbremssteuerdruckleitung 33 pneumatisch verbunden. In einer ersten Schaltstellung 80A des Kompensationsventils 80 ist der zweite Kompensationsventilanschluss 80.2 pneumatisch mit dem dritten Kompensationsventilanschluss 80.3 verbunden, und bevorzugt ist der erste Kompensationsventilanschluss 80.1 gesperrt. In der ersten Schaltstellung 80A ist somit der Kompensationspfad 82 und somit ist die Parkbremssteuerdruckleitung 33 mit dem Entlüftungsanschluss 3 pneumatisch verbunden.

Vorliegend weist das Kompensationsventil 80 zwischen dem ersten Kompensationsventilanschluss 80.1 und dem zweiten Kompensationsventilanschluss 80.2 eine erste Drossel 27 auf. Die erste Drossel 27 weist vorteilhaft eine Nennweite auf, die im Vergleich zum Kompensationspfad 82 und/oder zum Vorratsdruckpfad 70 geringer ist. Vorliegend weist das Kompensationsventil 80 zwischen dem zweiten Kompensationsventilanschluss 80.2 und dem dritten Kompensationsventilanschluss 80.3 eine zweite Drossel 28 auf. Die zweite Drossel 28 weist vorteilhaft eine Nennweite auf, die im Vergleich zum Kompensationspfad 82 und/oder zur Entlüftungsleitung 44, geringer ist.

Die Vorsteuerventileinheit 32 weist in dem hier gezeigten Ausführungsbeispiel (Fig. 3) ein erstes Vorsteuerventil 41 und ein zweites Vorsteuerventil 42 auf, die jeweils als 2/2-Wege-Magnetventile ausgebildet sind. Mittels des ersten Vorsteuerventils 41 kann in einer Öffnungsstellung 41A der Vorratsdruck pV vom Vorratsdruckpfad 70 als Parkbremssteuerdruck pPS an die Parkbremssteuerdruckleitung 33 bereitgestellt werden. Die Parkbremssteuerdruckleitung 33 ist zwischen dem ersten Vorsteuerventil 41 und dem zweiten Vorsteuerventil 42 angeordnet und pneumatisch mit dem Relaisventil-Steueranschluss 16.4 bzw. dem Wechselventil 60 verbunden oder verbindbar.

Durch das Schalten des ersten Vorsteuerventils 41 in eine Sperrstellung 41B kann der Parkbremssteuerdruck pPS in der Parkbremssteuerdruckleitung 33, insbesondere am Relaisventil-Steueranschluss 16.4, zur dauerhaften Betätigung eingefangen bzw. gehalten werden. Dabei ist das zweite Vorsteuerventil 42 ebenfalls in einer Sperrstellung 42B. Entsprechend des Aufbaus der Vorsteuerventileinheit 32 mit einem ersten Vorsteuerventil 41 und einem zweiten Vorsteuerventil 42 stellt die Parkbrems-Steuereinheit 10 zum Ansteuern des ersten Vorsteuerventils 41 das erste Schaltsignal S1 bereit und zum Ansteuern des zweiten Vorsteuerventils 42 das zweite Schaltsignal S2. Durch ein Schalten des zweiten Vorsteuerventils 42 in eine Öffnungsstellung 42A kann die Parkbremssteuerdruckleitung 33 zum Entlüften des Relaisventil-Steueranschlusses 16.4 mit der Entlüftungsleitung 44 pneumatisch verbunden werden.

Die Parkbremssteuerdruckleitung 33 ist zusätzlich - wie bereits aus dem ersten Ausführungsbeispiel bekannt - mit dem Anti-Compound-Anschluss 62 pneumatisch verbindbar. Mittels des Anti-Compound-Anschlusses 62 kann ein Zusatz-Feststellbremsdruck pSZ an die Parkbremssteuerdruckleitung 33 und insbesondere an den Relaisventil-Steueranschluss 16.4 bereitgestellt werden, um unabhängig von der Vorsteuerventileinheit 32 am Federspeicheranschluss 8, 9 einen Parkbremsdruck pBP auszusteuern. Insbesondere kann der Zusatz-Feststellbremsdruck pSZ von einer hier nicht dargestellten Betriebsbremsfunktion bereitgestellt werden, um eine Anti-Compound-Funktion zu realisieren.

Die elektropneumatische Feststellbremseinrichtung 1 weist einen Parkbrems-Drucksensor 64 auf, der pneumatisch mit dem Federspeicheranschluss 8, 9 verbunden ist zum Messen des Parkbremsdrucks pBP.

Das dritte Ausführungsbeispiel gemäß Fig. 4 basiert auf dem zweiten Ausführungsbeispiel gemäß Fig. 3. Der einzige Unterschied zwischen dem dritten Ausführungsbeispiel (Fig. 4) und dem zweiten Ausführungsbeispiel (Fig. 2) liegt darin, dass die Bypassabzweigleitung 56 nicht von der Parkbremsdruckleitung 54, das heißt stromabwärts des Relaisventils 16, abzweigt, sondern zwischen Vorsteuerventileinheit 32 und Hauptventileinheit 34, sodass das Bypassventil 50 den Parkbremssteuerdruck pPS entlüften oder bereitstellen kann, je nach Schaltstellung. Hierdurch kann eine Luftmengeneffizienz erhöht werden.

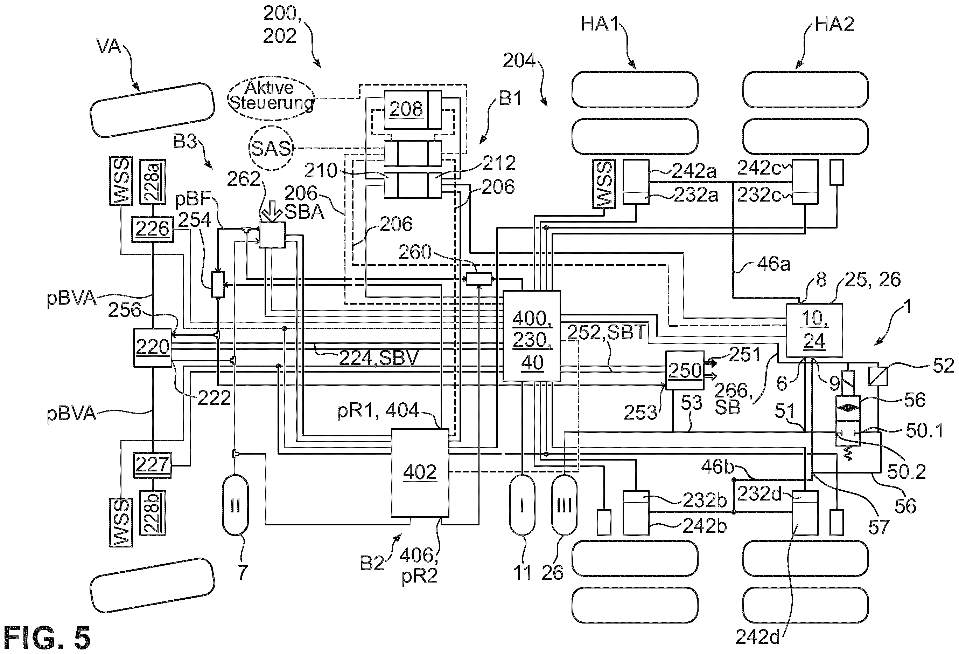

Fig. 5 zeigt nun ein zweites Fahrzeug 200, welches im Wesentlichen auf dem Ausführungsbeispiel der Fig. 1 beruht, sodass wiederum gleiche und ähnliche Elemente mit gleichen Bezugszeichen versehen sind und im Nachfolgenden insbesondere die Unterschiede hervorgehoben werden. Im Unterschied zum Fahrzeug 200 gemäß Fig. 2 weist das Fahrzeug 200 gemäß Fig. 5 eine elektropneumatische Feststellbremseinrichtung 1 auf, bei der das Bypassventil 50 separat und extern zur Parkbremsventileinheit 24 angeordnet ist. Die Parkbremsventileinheit 24 ist zusammen mit der Parkbrems-Steuereinheit 10 in ein herkömmliches Parkbremsmodul 25 integriert. Das Parkbremsmodul 25 weist ein Parkbremsmodulgehäuse 26 auf. Das Bypassventil 50 kann an das Parkbremsmodulgehäuse 26 angeflanscht sein oder separat und entfernt von diesem in dem Bremssystem 204 verbaut sein. Die Bypassabzweigleitung 56 zweigt dann extern von dem Parkbremsmodul 25 ab, und zwar von einer Federspeicherbremsdruckleitung 46a, 46b, die vom ersten Federspeicheranschluss 8 zu den ersten und dritten Federspeicherbremszylindern 242a, 242c bzw. von dem zweiten Federspeicheranschluss 9 zu den zweiten und vierten Federspeicherbremszylindern 242b, 242d verläuft. Von welcher der ersten und zweiten Federspeicherbremsdruckleitung 46a, 46b die Bypassabzweigleitung 56 abzweigt, ist funktional unerheblich und sollte so gewählt werden, dass ein möglichst kleiner Bauraum erreicht wird. In dem hier gezeigten Ausführungsbeispiel (Fig. 5) zweigt die Bypassabzweigleitung 56 über einen Bypassabzweigknoten 57 von der zweiten Federspeicherbremsdruckleitung 46b ab. Da (wie in Fig. 1 dargestellt) die ersten und zweiten Federspeicheranschlüsse 8, 9 intern in dem elektropneumatischen Feststellbremsmodul 2 unmittelbar und ohne weitere Zwischenschaltungen verbunden sind, reicht es aus, eine der ersten und zweiten Federspeicherbremsdruckleitungen 46a, 46b zu ent- oder zu belüften, um alle vier Federspeicherbremszylinder 242a - 242d zu be- bzw. entlüften.

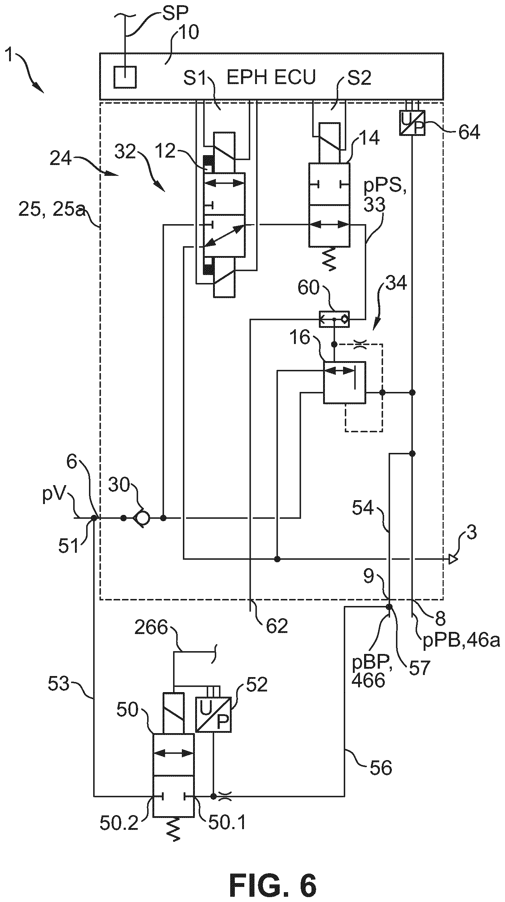

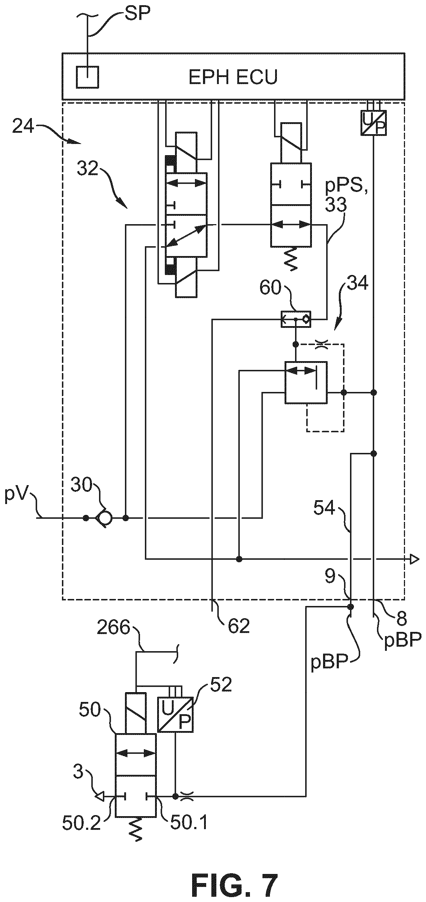

Die Fig. 6 und 7 zeigen nun Ausführungsformen, die im Rahmen des Fahrzeugs 200 gemäß Fig. 5 eingesetzt werden können und insofern ebenfalls extern angeordnete Bypassventile 50 umfassen. Gleiche und ähnliche Elemente sind wiederum mit gleichen Bezugszeichen versehen, sodass vollumfänglich auf die obige Beschreibung Bezug genommen wird. Im Folgenden werden insbesondere die Unterschiede zu den vorherigen Ausführungsbeispielen hervorgehoben.

Das in Fig. 6 gezeigte Ausführungsbeispiel orientiert sich weitestgehend an dem in Fig. 1 gezeigten Ausführungsbeispiel und insbesondere die Vorsteuerventileinheit 32 sowie die Hauptventileinheit 34 sind identisch ausgebildet.

In Übereinstimmung mit dem in Fig. 5 gezeigten Ausführungsbeispiel zweigt die Bypassabzweigleitung 56 extern von dem Parkbremsmodulgehäuse 26 ab und somit auch stromabwärts vom zweiten Federspeicheranschluss 9. Die Bypassvorratsleitung 53 verläuft ebenfalls extern zum Parkbremsmodulgehäuse 26 und zweigt von dem Bypassvorratsknoten 51 ab, der stromaufwärts des Vorratsanschlusses 6 angeordnet ist, also zwischen dem Parkbrems-Vorrat 26 und dem Vorratsanschluss 6. Das Bypassventil 50 ist also vollständig parallel zur Parkbremsventileinheit 24 aufgebaut und kann die zweite Federspeicherbremsdruckleitung 46b unmittelbar und direkt mit dem Parkbrems-Vorrat 26 verbinden.

Das in Fig. 7 gezeigte Ausführungsbeispiel unterscheidet sich nun von dem in Fig. 6 gezeigten Ausführungsbeispiel dadurch, dass der zweite Bypassventilanschluss 50.2 nicht über eine Bypassvorratsleitung 53 mit dem Parkbrems-Vorrat 26 verbunden ist, sondern mit einer Entlüftung 3. In diesem Ausführungsbeispiel ist es also nicht möglich, den Federspeicheranschluss 8 zu belüften, sondern lediglich zu entlüften.

### BEZUGSZEICHENLISTE (TEIL DER BESCHREIBUNG)

- 1: Elektropneumatische Feststellbremseinrichtung
- 2: Feststellbremsmodul
- 3: Entlüftung
- 4: Modulgehäuse
- 6: Vorratsanschluss
- 7: erster Druckluftvorrat
- 8: erster Federspeicheranschluss
- 9: zweiter Federspeicheranschluss
- 10: Parkbrems-Steuereinheit
- 11: zweiter Druckluftvorrat
- 12: Bistabilventil
- 12.1: erster Bistabilventilanschluss
- 12.2: zweiter Bistabilventilanschluss
- 12.3: dritter Bistabilventilanschluss
- 14: Halteventil
- 14.1: erster Halteventilanschluss
- 14.2: zweiter Halteventilanschluss
- 16: Relaisventil
- 16.1: Relaisventil-Vorratsanschluss
- 16.2: Relaisventil-Arbeitsanschluss
- 16.3: Relaisventil-Entlüftungsanschluss
- 16.4: Relaisventil-Steueranschluss
- 24: Parkbremsventileinheit
- 25: Parkbremsmodul
- 25a: Parkbremsmodulgehäuse
- 26: Parkbrems-Vorrat
- 27: erste Drossel
- 28: zweite Drossel
- 30: Rückschlagventil
- 32: Vorsteuerventileinheit
- 33: Parkbremssteuerdruckleitung
- 34: Hauptventileinheit
- 40: weitere elektronische Steuereinheit
- 41: erstes Vorsteuerventil
- 41A: Öffnungsstellung des ersten Vorsteuerventils
- 41B: Sperrstellung des ersten Vorsteuerventils
- 42: zweites Vorsteuerventil
- 42A: Öffnungsstellung des zweiten Vorsteuerventils
- 42B: Sperrstellung des zweiten Vorsteuerventils
- 44: Entlüftungsleitung
- 46a: erste Federspeicherbremsdruckleitung
- 46b: zweite Federspeicherbremsdruckleitung
- 50: Bypassventil
- 50.1: erster Bypassventilanschluss
- 50.2: zweiter Bypassventilanschluss
- 50A: Sperrstellung des Bypassventils
- 50B: Durchlassstellung des Bypassventils
- 51: Bypassvorratsknoten
- 52: Bypassdrucksensor
- 53: Bypassvorratsleitung
- 54: Parkbremsdruckleitung
- 56: Bypassabzweigleitung
- 57: Bypassabzweigknoten
- 60: Wechselventil
- 60.1: erster Wechselventilanschluss
- 60.2: zweiter Wechselventilanschluss
- 62: Anti-Compound-Anschluss
- 64: Parkbrems-Drucksensor
- 70: Vorratsdruckpfad
- 74: Vorratszweig des Vorratsdruckpfads
- 76: Steuerzweig des Vorratsdruckpfads
- 80: Kompensationsventil
- 80A: erste Schaltstellung des Kompensationsventils
- 80B: Schaltstellung des Kompensationsventils
- 80.1: erster Kompensationsventilanschluss
- 80.2: zweiter Kompensationsventilanschluss
- 80.3: dritter Kompensationsventilanschluss
- 80.4: Kompensationsventil-Steueranschluss
- 82: Kompensationspfad
- 83: Kompensationssteuerpfades
- 200: Fahrzeug
- 202: Nutzfahrzeug
- 204: elektronisch steuerbares pneumatisches Bremssystem
- 206: Fahrzeug-BUS
- 208: Einheit für autonomes Fahren
- 210: zweite Spannungsquelle
- 212: erste Spannungsquelle
- 220: Vorderachsmodulator
- 222: Vorderachs-Vorratsanschluss
- 224: Vorderachssignalleitung
- 226: erstes ABS-Ventil
- 227: zweites ABS-Ventil
- 228a: erster Vorderachsbetriebsbremsaktuator
- 228b: zweiter Vorderachsbetriebsbremsaktuator
- 230: Hinterachsmodulator
- 232a: erster Hinterachsbetriebsbremsaktuator
- 232b: zweiter Hinterachsbetriebsbremsaktuator
- 232c: dritter Hinterachsbetriebsbremsaktuator
- 232d: vierter Hinterachsbetriebsbremsaktuator
- 242a: erster Federspeicherbremszylinder
- 242b: zweiter Federspeicherbremszylinder
- 242c: dritter Federspeicherbremszylinder
- 242d: vierter Federspeicherbremszylinder
- 250: Anhängersteuereinheit
- 251: Anhängerbremsdruckanschluss
- 252: Anhängersignalleitung
- 253: Anhängerredundanzanschluss
- 254: Vorderachs-Wechselventil
- 256: Vorderachsredundanzanschluss
- 258: Hinterachsredundanzanschluss
- 260: Hinterachs-Wechselventil
- 262: Fußbremspedal
- 264: Federspeicheranschluss
- 266: Bypassignalleitung
- 300: erste elektronische Steuereinheit
- 302: zweite elektronische Steuereinheit
- 400: Primär-Steuereinheit
- 402: Sekundär-Steuereinheit
- 404: erster Redundanzbremsdruckanschluss
- 406: zweiter Redundanzbremsdruckanschluss
- A1: erste Achse
- A2: zweite Achse
- B1: Betriebsebene
- B2: erste Redundanzebene
- B3: zweiter Redundanzebene
- HA1: erste Hinterachse
- HA2: zweite Hinterachse
- pBF: Fußbremsdruck
- pBHA: Hinterachsbetriebsbremsdruck
- pBP: Parkbremsdruck
- pBVA: Vorderachsbetriebsbremsdruck
- pPS: Parkbremssteuerdruck
- pR1: erster Redundanzbremsdruck
- pR2: zweiter Redundanzbremsdruck
- pSZ: Zusatz-Feststellbremsdruck
- pV: Vorratsdruck
- S1: erstes Schaltsignal
- S2: zweites Schaltsignal
- SB: Bypass-Schaltsignal
- SBA: Bremsanforderungssignale
- SBT: Anhängerbremssignale
- SBV: Vorderachsbremssignale
- SDB: Bypassdrucksignal
- SP: Parkbremssignal
- VA: Vorderachse

## Patentansprüche

1. Elektropneumatische Feststellbremseinrichtung (1) zur Belüftung und Entlüftung von einem oder mehreren Federspeicherbremszylindern eines elektronisch steuerbaren pneumatischen Bremssystems (204) für ein Fahrzeug (200, 202), umfassend
eine Parkbremsventileinheit (24) mit einem Vorratsanschluss zum Empfangen von Vorratsdruck (pV) von einem Parkbrems-Vorrat (26), wobei die Parkbremsventileinheit (24) in Abhängigkeit von einem Parkbremssignal (SP) einen Parkbremsdruck (pBP) an wenigstens einem Federspeicheranschluss (8, 9) aussteuert,
und ein zwischen der Parkbremsventileinheit (24) und dem Parkbrems-Vorrat (26) angeordnetes Rückschlagventil (30), um ein Rückströmen von Druckluft von der Parkbremsventileinheit (24) zum Parkbrems-Vorrat (26) zu verhindern,
**gekennzeichnet durch** ein Bypassventil (50), welches zum Belüften und zum Entlüften des Federspeicheranschlusses (8. 9) schaltbar ist, wobei das Bypassventil (50) unabhängig von der Parkbremsventileinheit (24) angesteuert und geschaltet wird.

2. Elektropneumatische Feststellbremseinrichtung nach Anspruch 1, wobei das Bypassventil (50) elektromagnetisch ausgebildet ist und von einer von der Parkbremsventileinheit (24) unabhängigen weiteren elektronischen Steuereinheit (40) ansteuerbar ist.

3. Elektropneumatische Feststellbremseinrichtung nach Anspruch 2, aufweisend einen Bypassdrucksensor (52) zum Erfassen des am Federspeicheranschluss ausgesteuerten Parkbremsdrucks (pBP), wobei der Bypassdrucksensor (52) mit der von der Parkbremsventileinheit (24) unabhängigen weiteren elektronischen Steuereinheit (40) verbunden ist.

4. Elektropneumatische Feststellbremseinrichtung nach einem der vorstehenden Ansprüche, wobei das Bypassventil (50) monostabil ist und eine Sperrstellung (50A) sowie eine Durchlassstellung (50B) einnehmen kann, wobei das Bypassventil (50) stabil in der Sperrstellung (50A) ist.

5. Elektropneumatische Feststellbremseinrichtung nach einem der vorstehenden Ansprüche, wobei das Bypassventil (50) einen mit dem Federspeicheranschluss (8, 9) oder einer dem Federspeicheranschluss (8, 9) vorgeschalteten Hauptventileinheit (34) verbundenen ersten Bypassventilanschluss (50.1) und einen mit einer Entlüftung (3) verbundenen zweiten Bypassventilanschluss (50.2) aufweist.

6. Elektropneumatische Feststellbremseinrichtung nach einem der vorstehenden Ansprüche 1 bis 4, wobei das Bypassventil (50) einen mit dem Federspeicheranschluss (8, 9) oder einer dem Federspeicheranschluss (8, 9) vorgeschalteten Hauptventileinheit (34) verbundenen ersten Bypassventilanschluss (50.1) und einen mit dem Parkbrems-Vorrat (26) stromaufwärts des Rückschlagventils (30) verbundenen zweiten Bypassventilanschluss (50.2) aufweist.

7. Elektropneumatische Feststellbremseinrichtung nach einem der vorstehenden Ansprüche, wobei das Bypassventil (50) mit der Parkbremsventileinheit (24) als eine Baueinheit ausgebildet ist.

8. Elektropneumatische Feststellbremseinrichtung nach einem der vorstehenden Ansprüche, wobei das Bypassventil (50) mit der Parkbremsventileinheit (24) in einem Modulgehäuse (4) untergebracht ist.

9. Elektropneumatische Feststellbremseinrichtung nach einem der vorstehenden Ansprüche, wobei das Bypassventil (50) unmittelbar mit einer stromabwärts des Federspeicheranschlusses (8, 9) an diesen angeschlossenen Parkbremsdruckleitung (54) verbunden ist.

10. Elektropneumatische Feststellbremseinrichtung nach einem der vorstehenden Ansprüche, wobei die Parkbremsventileinheit (24) eine Vorsteuerventileinheit (32) und eine Hauptventileinheit (34) aufweist, wobei die Vorsteuerventileinheit (32) dazu vorgesehen ist, einen Parkbremssteuerdruck (pPS) an der Hauptventileinheit (34) auszusteuern, die dann in Abhängigkeit von dem empfangenen Parkbremssteuerdruck (pPS) den Parkbremsdruck (pBP) an dem Federspeicheranschluss (8, 9) aussteuert.

11. Elektropneumatische Feststellbremseinrichtung nach Anspruch 10, wobei das erste Bypassventil (50) mit der Hauptventileinheit (34) verbunden ist, wobei der Parkbremssteuerdruck (pPS) über das Bypassventil (50) entlüftbar ist.

12. Elektropneumatische Feststellbremseinrichtung nach Anspruch 11, wobei das Bypassventil (50) mit einer Bypassabzweigleitung (56) verbunden ist, die von einer Parkbremssteuerdruckleitung (33) abzweigt, über die von der Vorsteuerventileinheit (32) der Parkbremssteuerdruck (pPS) an der Hauptventileinheit (34) bereitgestellt wird.

13. Elektropneumatische Feststellbremseinrichtung nach Anspruch 12, wobei in der Parkbremssteuerdruckleitung (33) ein erstes Wechselventil (60) vorgesehen ist, welches einen mit der Vorsteuerventileinheit (32) verbundenen ersten Wechselventilanschluss (60.1), einen mit einem Anti-Compound-Anschluss (62) verbundenen zweiten Wechselventilanschluss (60.2) und einen mit der Hauptventileinheit (34) verbundenen dritten Wechselventilanschluss (60.3) aufweist, wobei das erste Wechselventil (60) jeweils den an dem ersten Wechselventilanschluss (60.1) und dem zweiten Wechselventilanschluss (60.2) höheren anstehenden Druck an dem dritten Wechselventilanschluss (60.3) aussteuert.

14. Elektropneumatische Feststellbremseinrichtung nach Anspruch 13, wobei die Bypassabzweigleitung (56) zwischen dem ersten Wechselventilanschluss (60.1) und der Vorsteuerventileinheit (32) abzweigt.

15. Elektropneumatische Feststellbremseinrichtung nach einem der vorstehenden Ansprüche 10 bis 14, wobei die Parkbremsventileinheit (24) ein Kompensationsventil (80) aufweist, welches dazu vorgesehen ist, einen von der Vorsteuerventileinheit (32) an der Hauptventileinheit (34) ausgesteuerten Parkbremssteuerdruck (pPS) aufrechtzuerhalten und so eine Leckage der Vorsteuerventileinheit (32) und/oder der Hauptventileinheit (34) wenigstens teilweise auszugleichen.

16. Elektropneumatische Feststellbremseinrichtung nach Anspruch 15,
wobei das Kompensationsventil (80) als pneumatisch schaltbares 3/2-Wege-Ventil (81) ausgebildet ist und einen mit dem Rückschlagventil (30) verbundenen ersten Kompensationsventilanschluss (80.1), einen mit einer den Parkbremssteuerdruck (pPS) führenden Leitung (82) verbundenen zweiten Kompensationsventilanschluss (80.2) und einen mit einer Entlüftung (3) verbundenen dritten Kompensationsventilanschluss (80.3) aufweist,
wobei das Kompensationsventil (80) federbelastet ist eine erste Schaltstellung vorgespannt ist, in der der zweite Kompensationsventilanschluss (80.2) mit dem dritten Kompensationsventilanschluss (80.3) verbunden ist und falls ein an einem Kompensationsventil-Steueranschluss (80.4) bereitgestellter Kompensationsventil-Steuerdruck (pSK) einen Kompensationsventilschwellwert überschreitet in eine zweite Schaltstellung schaltet, in welcher der erste Kompensationsventilanschluss (80.1) mit dem zweiten Kompensationsventilanschluss (80.2) verbunden ist, und
wobei der Kompensationsventil-Steuerdruck (pSK) ein am zweiten Kompensationsventilanschluss (80.2) anliegender oder ausgesteuerter Druck (pPS) ist, wodurch eine pneumatische Selbsthaltung für das Kompensationsventil (80) realisiert ist.

17. Elektropneumatische Feststellbremseinrichtung nach Anspruch 16, wobei das Kompensationsventil (80) gedrosselt ausgebildet ist, derart, dass die Verbindung des ersten Kompensationsventilanschlusses (80.1) mit dem zweiten Kompensationsventilanschluss (80.2) sowie die Verbindung des zweiten Kompensationsventilanschlusses (80.2) mit dem dritten Kompensationsventilanschluss (80.3) jeweils gedrosselt ist.

18. Elektropneumatische Feststellbremseinrichtung nach einem der vorstehenden Ansprüche, wobei die Parkbremsventileinheit (24) und das Bypassventil (50) von zwei unabhängigen Spannungsquellen (210, 212) mit elektrischer Spannung versorgt werden.

19. Elektronisch steuerbares pneumatisches Bremssystem (204) für ein Fahrzeug (200,202), umfassend
wenigstens einen ersten Vorderachsbremsaktuator (228a) und einen zweiten Vorderachsbremsaktuator (228b) an einer Vorderachse (VA) des Fahrzeugs (200) und wenigstens einen ersten Hinterachsbremsaktuator (242a) und einen zweiten Hinterachsbremsaktuator (242b) an einer Hinterachse (HA1, HA2) des Fahrzeugs (200);
ein Primärsystem (B1) mit einer Primär-Steuereinheit (400) wenigstens zum Ansteuern des ersten Vorderachsbremsaktuators (228a), des zweiten Vorderachsbremsaktuators (228b), des ersten Hinterachsbremsaktuators (242a) und des zweiten Hinterachsbremsaktuators (242b); und
eine elektropneumatische Feststellbremseinrichtung (1) nach einem der Ansprüche 1 bis 18, wobei an den wenigstens einen Federspeicheranschluss (8, 9) wenigstens ein erster Federspeicherbremszylinder (232a) an der Hinterachse (HA1, HA2) angeschlossen ist, und wobei das Bypassventil (50) zum Belüften und zum Entlüften des ersten Federspeicherbremszylinders (242a) schaltbar ist, wobei das Bypassventil (50) unabhängig von der Parkbremsventileinheit (24) angesteuert und geschaltet wird.

20. Elektronisch steuerbares pneumatisches Bremssystem (1) nach Anspruch 19, wobei die Parkbremsventileinheit (24) mit einer Parkbrems-Steuereinheit (10) verbunden ist und von dieser Schaltsignale (S1, S2) empfängt, und wobei das Bypassventil (50) mit einer von der Parkbremsventileinheit (24) unabhängigen weiteren elektronischen Steuereinheit (40) verbunden ist und von dieser wenigstens ein Bypass-Schaltsignal (SB) empfängt.

21. Elektronisch steuerbares pneumatisches Bremssystem (1) nach Anspruch 20, wobei die Parkbrems-Steuereinheit (10) mit einer ersten Spannungsquelle (212) verbunden ist und von dieser mit elektrischer Spannung versorgt wird, und die weitere elektronische Steuereinheit (40) mit einer zweiten Spannungsquelle (210) verbunden ist und von dieser mit elektrischer Spannung versorgt wird.

22. Elektronisch steuerbares pneumatisches Bremssystem (1) nach einem der vorstehenden Ansprüche 19 bis 21, wobei die Primär-Steuereinheit (400) die weitere Steuereinheit (40) bildet oder aufweist.

23. Elektronisch steuerbares pneumatisches Bremssystem (1) nach einem der vorstehenden Ansprüche 19 bis 22, ferner aufweisend ein Sekundärsystem (B2) mit einer Sekundär-Steuereinheit (404) wenigstens zum Ansteuern des ersten Vorderachsbremsaktuators (20a), des zweiten Vorderachsbremsaktuators (20b), des ersten Hinterachsbremsaktuators (18a) und des zweiten Hinterachsbremsaktuators (18b), wobei für den Fall, dass im Primärsystem (6) ein Fehler (F) ermittelt wird die Steuerung des elektronisch steuerbaren pneumatischen Bremssystems (1) wenigstens teilweise durch das Sekundärsystem (8) erfolgt.

24. Elektronisch steuerbares pneumatisches Bremssystem nach Anspruch 23, wobei die Sekundär-Steuereinheit (40) die weitere Steuereinheit bildet oder aufweist.

25. Fahrzeug (2), insbesondere Nutzfahrzeug (200), mit einer Vorderachse (VA), wenigstens einer ersten Hinterachse (HA1) und einem elektronisch steuerbaren pneumatischen Bremssystem (1) nach einem der vorstehenden Ansprüche 19 bis 24.

26. Verfahren zum Steuern eines elektronisch steuerbaren pneumatischen Bremssystems, vorzugsweise nach einem der Ansprüche 19 bis 24, mit den Schritten:
- Ansteuern einer Parkbremsventileinheit mittels einer Parkbrems-Steuereinheit (10) zum Be- und Entlüften von wenigsten einem Federspeicherbremszylinder (19a) an einer Hinterachse (HA1, HA2) eines Nutzfahrzeugs, wobei die Parkbremsventileinheit über ein Rückschlagventil mit einem Parkbrems-Vorrat verbunden ist und von diesem Vorratsdruck empfängt;
- Ermitteln eines Fehlers in dem elektronisch steuerbaren pneumatischen Bremssystem, insbesondere der Parkbrems-Steuereinheit (10) oder Parkbremsventileinheit;
- Schalten eines Bypassventils, welches sowohl mit dem wenigstens einen Federspeicherbremszylinder als auch dem Parkbrems-Vorrat verbunden ist, in eine Entlüftungsstellung zum Entlüften des wenigstens einen Federspeicherbremszylinders;
wobei das Bypass-Ventil in Antwort auf ein Bypass-Schaltsignal schaltet, welches von einer weiteren elektronischen Steuereinheit bereitgestellt wird, die unabhängig von der Parkbrems-Steuereinheit (10) ist.

27. Verfahren nach Anspruch 26, wobei die Parkbrems-Steuereinheit (10) mit einer ersten Spannungsquelle verbunden ist und von dieser mit elektrischer Spannung versorgt wird, und die weitere Steuereinheit mit einer zweiten Spannungsquelle verbunden ist und von dieser mit elektrischer Spannung versorgt wird.

28. Verfahren nach Anspruch 26 oder 27, umfassend den Schritt:
- Absenken des Vorratsdrucks im Parkbrems-Vorrat zum Entlüften des wenigstens einen Federspeicherbremszylinders.

## Claims

1. Electropneumatic parking brake device (1) for venting and bleeding one or more spring brake cylinders of an electronically controllable pneumatic brake system (204) for a vehicle (200, 202), comprising
a parking brake valve unit (24) having a supply connection for receiving supply pressure (pV) from a parking brake supply (26), the parking brake valve unit (24) modulating a parking brake pressure (pBP) at at least one spring-loaded connection (8, 9) on the basis of a parking brake signal (SP),
and a non-return valve (30) arranged between the parking brake valve unit (24) and the parking brake supply (26) to prevent a backflow of compressed air from the parking brake valve unit (24) to the parking brake supply (26),
**characterized by** a bypass valve (50) which can be switched to vent and bleed the spring-loaded connection (8, 9), the bypass valve (50) being controlled and switched independently of the parking brake valve unit (24).

2. Electropneumatic parking brake device according to claim 1, wherein the bypass valve (50) is electromagnetic and can be controlled by a further electronic control unit (40) independent of the parking brake valve unit (24).

3. Electropneumatic parking brake device according to claim 2, comprising a bypass pressure sensor (52) for detecting the parking brake pressure (pBP) modulated at the spring-loaded connection, wherein the bypass pressure sensor (52) is connected to the further electronic control unit (40) which is independent of the parking brake valve unit (24).

4. Electropneumatic parking brake device according to any of the preceding claims, wherein the bypass valve (50) is monostable and can assume a blocking position (50A) and a passing-through position (50B), wherein the bypass valve (50) is stable in the blocking position (50A).

5. Electropneumatic parking brake device according to any of the preceding claims, wherein the bypass valve (50) has a first bypass valve connection (50.1) connected to the spring-loaded connection (8, 9) or to a main valve unit (34) upstream of the spring-loaded connection (8, 9) and a second bypass valve connection (50.2) connected to a bleed means (3).

6. Electropneumatic parking brake device according to any of the preceding claims 1 to 4, wherein the bypass valve (50) has a first bypass valve connection (50.1) connected to the spring-loaded connection (8, 9) or to a main valve unit (34) upstream of the spring-loaded connection (8, 9) and a second bypass valve connection (50.2) connected to the parking brake supply (26) upstream of the non-return valve (30).

7. Electropneumatic parking brake device according to any of the preceding claims, wherein the bypass valve (50) together with the parking brake valve unit (24) is designed as a structural unit.

8. Electropneumatic parking brake device according to any of the preceding claims, wherein the bypass valve (50) is accommodated with the parking brake valve unit (24) in a module housing (4).

9. Electropneumatic parking brake device according to any of the preceding claims, wherein the bypass valve (50) is connected directly to a parking brake pressure line (54) coupled to the spring-loaded connection (8, 9) downstream thereof.

10. Electropneumatic parking brake device according to any of the preceding claims, wherein the parking brake valve unit (24) has a pilot valve unit (32) and a main valve unit (34), wherein the pilot valve unit (32) is intended to modulate a parking brake control pressure (pPS) at the main valve unit (34), which then modulates the parking brake pressure (pBP) at the spring-loaded connection (8, 9) on the basis of the received parking brake control pressure (pPS).

11. Electropneumatic parking brake device according to claim 10, wherein the first bypass valve (50) is connected to the main valve unit (34), wherein the parking brake control pressure (pPS) can be bled via the bypass valve (50).

12. Electropneumatic parking brake device according to claim 11, wherein the bypass valve (50) is connected to a bypass branch line (56) which branches off from a parking brake control pressure line (33) via which the parking brake control pressure (pPS) is provided to the main valve unit (34) by the pilot valve unit (32).

13. Electropneumatic parking brake device according to claim 12, wherein a first shuttle valve (60) is provided in the parking brake control pressure line (33), which has a first shuttle valve connection (60.1) connected to the pilot valve unit (32), a second shuttle valve connection (60.2) connected to an anti-compound connection (62) and a third shuttle valve connection (60.3) connected to the main valve unit (34), wherein the first shuttle valve (60) respectively modulates, at the third shuttle valve connection (60.3), the higher pressure present at the first shuttle valve connection (60.1) and the second shuttle valve connection (60.2).

14. Electropneumatic parking brake device according to claim 13, wherein the bypass branch line (56) branches off between the first shuttle valve connection (60.1) and the pilot valve unit (32).

15. Electropneumatic parking brake device according to any of the preceding claims 10 to 14, wherein the parking brake valve unit (24) has a compensation valve (80) which is provided to maintain a parking brake control pressure (pPS) modulated by the pilot valve unit (32) at the main valve unit (34) and thus at least partially compensate for a leakage in the pilot valve unit (32) and/or the main valve unit (34).

16. Electropneumatic parking brake device according to claim 15,
wherein the compensation valve (80) is designed as a pneumatically switchable 3/2-way valve (81) and has a first compensation valve connection (80.1) connected to the non-return valve (30), a second compensation valve connection (80.2) connected to a line (82) guiding the parking brake control pressure (pPS) and a third compensation valve connection (80.3) connected to a bleed means (3),
wherein the compensation valve (80) is spring-loaded a first switching position is preloaded, in which the second compensation valve connection (80.2) is connected to the third compensation valve connection (80.3) and if a compensation valve control pressure (pSK) provided at a compensation valve control connection (80.4) exceeds a compensation valve threshold value, switches to a second switching position in which the first compensation valve connection (80.1) is connected to the second compensation valve connection (80.2), and
wherein the compensation valve control pressure (pSK) is a pressure (pPS) present or modulated at the second compensation valve connection (80.2), whereby pneumatic locking for the compensation valve (80) is implemented.

17. Electropneumatic parking brake device according to claim 16, wherein the compensation valve (80) is designed to be throttled such that the connection of the first compensation valve connection (80.1) to the second compensation valve connection (80.2) and the connection of the second compensation valve connection (80.2) to the third compensation valve connection (80.3) are each throttled.

18. Electropneumatic parking brake device according to any of the preceding claims, wherein the parking brake valve unit (24) and the bypass valve (50) are supplied with electrical voltage from two independent voltage sources (210, 212).

19. Electronically controllable pneumatic brake system (204) for a vehicle (200, 202), comprising
at least one first front-axle brake actuator (228a) and one second front-axle brake actuator (228b) on a front axle (VA) of the vehicle (200) and at least one first rear-axle brake actuator (242a) and one second rear-axle brake actuator (242b) on a rear axle (HA1, HA2) of the vehicle (200);
a primary system (B1) having a primary control unit (400) at least for controlling the first front-axle brake actuator (228a), the second front-axle brake actuator (228b), the first rear-axle brake actuator (242a) and the second rear-axle brake actuator (242b); and
an electropneumatic parking brake device (1) according to any of claims 1 to 18, wherein at least one first spring brake cylinder (232a) is coupled to the at least one spring-loaded brake connection (8, 9) at the rear axle (HA1, HA2), and wherein the bypass valve (50) can be switched for venting and bleeding the first spring brake cylinder (242a), wherein the bypass valve (50) is controlled and switched independently of the parking brake valve unit (24).

20. Electronically controllable pneumatic brake system (1) according to claim 19, wherein the parking brake valve unit (24) is connected to a parking brake control unit (10) and receives switching signals (S1, S2) therefrom, and wherein the bypass valve (50) is connected to a further electronic control unit (40) independent of the parking brake valve unit (24) and receives at least one bypass switching signal (SB) therefrom.

21. Electronically controllable pneumatic brake system (1) according to claim 20, wherein the parking brake control unit (10) is connected to a first voltage source (212) and is supplied with electrical voltage thereby, and the further electronic control unit (40) is connected to a second voltage source (210) and is supplied with electrical voltage thereby.

22. Electronically controllable pneumatic brake system (1) according to any of the preceding claims 19 to 21, wherein the primary control unit (400) forms or comprises the further control unit (40).

23. Electronically controllable pneumatic brake system (1) according to any of the preceding claims 19 to 22, further comprising a secondary system (B2) having a secondary control unit (404) at least for controlling the first front-axle brake actuator (20a), the second front-axle brake actuator (20b), the first rear-axle brake actuator (18a) and the second rear-axle brake actuator (18b), wherein in the case that an error (F) is determined in the primary system (6), the electronically controllable pneumatic brake system (1) is controlled at least partially by the secondary system (8).

24. Electronically controllable pneumatic brake system according to claim 23, wherein the secondary control unit (40) forms or comprises the further control unit.

25. Vehicle (2), in particular commercial vehicle (200), comprising a front axle (VA), at least one first rear axle (HA1) and an electronically controllable pneumatic brake system (1) according to any of the preceding claims 19 to 24.

26. Method for controlling an electronically controllable pneumatic brake system, preferably according to any of claims 19 to 24, having the following steps:
- controlling a parking brake valve unit by means of a parking brake control unit (10) for venting and bleeding at least one spring brake cylinder (19a) on a rear axle (HA1, HA2) of a commercial vehicle, wherein the parking brake valve unit is connected to a parking brake supply via a non-return valve and receives supply pressure therefrom;
- determining a fault in the electronically controllable pneumatic brake system, in particular the parking brake control unit (10) or parking brake valve unit;
- switching a bypass valve, which is connected both to the at least one spring brake cylinder and to the parking brake supply, into a bleeding position for bleeding the at least one spring brake cylinder;
wherein the bypass valve switches in response to a bypass switching signal provided by a further electronic control unit which is independent of the parking brake control unit (10).

27. Method according to claim 26, wherein the parking brake control unit (10) is connected to a first voltage source and is supplied with electrical voltage thereby, and the further control unit is connected to a second voltage source and is supplied with electrical voltage thereby.

28. Method according to either claim 26 or claim 27, comprising the step of:
- lowering the supply pressure in the parking brake supply to bleed the at least one spring brake cylinder.

## Revendications

1. Dispositif de frein de stationnement électropneumatique (1) pour l'aération et la purge d'un ou de plusieurs cylindres de frein à accumulateur à ressort d'un système de freinage pneumatique (204) pouvant être commandé électroniquement pour un véhicule (200, 202), comprenant
une unité de soupape de frein de stationnement (24) comportant un raccord de réserve pour recevoir une pression de réserve (pV) provenant d'une réserve de frein de stationnement (26), dans lequel l'unité de soupape de frein de stationnement (24) commande une pression de frein de stationnement (pBP) au niveau d'au moins un raccord d'accumulateur à ressort (8, 9) en fonction d'un signal de frein de stationnement (SP),
et une soupape antiretour (30) disposée entre l'unité de soupape de frein de stationnement (24) et la réserve de frein de stationnement (26) pour empêcher de l'air comprimé de refluer de l'unité de soupape de frein de stationnement (24) vers la réserve de frein de stationnement (26),
**caractérisé par** une soupape de dérivation (50) qui peut être commutée pour aérer et pour purger le raccord d'accumulateur à ressort (8, 9), dans lequel la soupape de dérivation (50) est commandée et commutée indépendamment de l'unité de soupape de frein de stationnement (24).

2. Dispositif de frein de stationnement électropneumatique selon la revendication 1, dans lequel la soupape de dérivation (50) est conçue de manière à être électromagnétique et peut être commandée par une autre unité de commande électronique (40) indépendante de l'unité de soupape de frein de stationnement (24).

3. Dispositif de frein de stationnement électropneumatique selon la revendication 2, présentant un capteur de pression de dérivation (52) permettant de détecter la pression de frein de stationnement (pBP) commandée au niveau du raccord d'accumulateur à ressort, dans lequel le capteur de pression de dérivation (52) est connecté à l'autre unité de commande électronique (40) indépendante de l'unité de soupape de frein de stationnement (24).

4. Dispositif de frein de stationnement électropneumatique selon l'une des revendications précédentes, dans lequel la soupape de dérivation (50) est monostable et peut occuper une position de blocage (50A) ainsi qu'une position de passage (50B), dans lequel la soupape de dérivation (50) est stable dans la position de blocage (50A).

5. Dispositif de frein de stationnement électropneumatique selon l'une des revendications précédentes, dans lequel la soupape de dérivation (50) présente un premier raccord de soupape de dérivation (50.1) relié au raccord d'accumulateur à ressort (8, 9) ou à une unité de soupape principale (34) montée en amont du raccord d'accumulateur à ressort (8, 9), et un second raccord de soupape de dérivation (50.2) relié à un moyen de purge (3).

6. Dispositif de frein de stationnement électropneumatique selon l'une des revendications 1 à 4 précédentes, dans lequel la soupape de dérivation (50) présente un premier raccord de soupape de dérivation (50.1) relié au raccord d'accumulateur à ressort (8, 9) ou à une unité de soupape principale (34) montée en amont du raccord d'accumulateur à ressort (8, 9), et un second raccord de soupape de dérivation (50.2) relié à la réserve de frein de stationnement (26) en amont de la soupape antiretour (30).

7. Dispositif de frein de stationnement électropneumatique selon l'une des revendications précédentes, dans lequel la soupape de dérivation (50) est conçue en tant qu'unité structurale avec l'unité de soupape de frein de stationnement (24).

8. Dispositif de frein de stationnement électropneumatique selon l'une des revendications précédentes, dans lequel la soupape de dérivation (50) est montée avec l'unité de soupape de frein de stationnement (24) dans un boîtier modulaire (4).

9. Dispositif de frein de stationnement électropneumatique selon l'une des revendications précédentes, dans lequel la soupape de dérivation (50) est directement reliée à une conduite de pression de frein de stationnement (54) raccordée au raccord d'accumulateur à ressort (8, 9) en aval de celui-ci.

10. Dispositif de frein de stationnement électropneumatique selon l'une des revendications précédentes, dans lequel l'unité de soupape de frein de stationnement (24) présente une unité de soupape pilote (32) et une unité de soupape principale (34), dans lequel l'unité de soupape pilote (32) est prévue pour commander une pression de commande de frein de stationnement (pPS) au niveau de l'unité de soupape principale (34), laquelle commande ensuite la pression de frein de stationnement (pBP) au niveau du raccord d'accumulateur à ressort (8, 9) en fonction de la pression de commande de frein de stationnement (pPS) reçue.

11. Dispositif de frein de stationnement électropneumatique selon la revendication 10, dans lequel la première soupape de dérivation (50) est reliée à l'unité de soupape principale (34), dans lequel la pression de commande de frein de stationnement (pPS) peut être purgée par l'intermédiaire de la soupape de dérivation (50).

12. Dispositif de frein de stationnement électropneumatique selon la revendication 11, dans lequel la soupape de dérivation (50) est reliée à une conduite de dérivation (56) qui dérive à partir d'une conduite de pression de commande de frein de stationnement (33) par l'intermédiaire de laquelle la pression de commande de frein de stationnement (pPS) est fournie par l'unité de soupape pilote (32) à l'unité de soupape principale (34).

13. Dispositif de frein de stationnement électropneumatique selon la revendication 12, dans lequel une première soupape de changement (60) est prévue dans la conduite de pression de commande de frein de stationnement (33), laquelle première soupape de changement présente un premier raccord de soupape de changement (60.1) relié à l'unité de soupape pilote (32), un deuxième raccord de soupape de changement (60.2) relié à un raccord de non-addition des efforts de freinage (62) et un troisième raccord de soupape de changement (60.3) relié à l'unité de soupape principale (34), dans lequel la première soupape de changement (60) commande respectivement, au niveau du troisième raccord de soupape de changement (60.3), la pression plus élevée présente au niveau du premier raccord de soupape de changement (60.1) et du deuxième raccord de soupape de changement (60.2).

14. Dispositif de frein de stationnement électropneumatique selon la revendication 13, dans lequel la conduite de dérivation (56) dérive entre le premier raccord de soupape de changement (60.1) et l'unité de soupape pilote (32).

15. Dispositif de frein de stationnement électropneumatique selon l'une des revendications 10 à 14 précédentes, dans lequel l'unité de soupape de frein de stationnement (24) présente une soupape de compensation (80) qui est prévue pour maintenir une pression de commande de frein de stationnement (pPS) commandée par l'unité de soupape pilote (32) au niveau de l'unité de soupape principale (34) et ainsi compenser au moins partiellement une fuite de l'unité de soupape pilote (32) et/ou de l'unité de soupape principale (34).

16. Dispositif de frein de stationnement électropneumatique selon la revendication 15,
dans lequel la soupape de compensation (80) est conçue en tant que soupape à 3/2 voies (81) pouvant être commandée pneumatiquement et présente un premier raccord de soupape de compensation (80.1) relié à la soupape antiretour (30), un deuxième raccord de soupape de compensation (80.2) relié à une conduite (82) conduisant la pression de commande de frein de stationnement (pPS) et un troisième raccord de soupape de compensation (80.3) relié à un moyen de purge (3),
dans lequel la soupape de compensation (80) est chargée de manière élastique une première position de commutation est précontrainte dans laquelle le deuxième raccord de soupape de compensation (80.2) est relié au troisième raccord de soupape de compensation (80.3) et, si une pression de commande de soupape de compensation (pSK) fournie à un raccord de commande de soupape de compensation (80.4) dépasse une valeur seuil de soupape de compensation, commute vers une seconde position de commutation dans laquelle le premier raccord de soupape de compensation (80.1) est relié au deuxième raccord de soupape de compensation (80.2), et
dans lequel la pression de commande de soupape de compensation (pSK) est une pression (pPS) appliquée ou commandée au niveau du deuxième raccord de soupape de compensation (80.2), moyennant quoi un maintien automatique pneumatique pour la soupape de compensation (80) est réalisé.

17. Dispositif de frein de stationnement électropneumatique selon la revendication 16, dans lequel la soupape de compensation (80) est conçue de manière à être étranglée, de telle sorte que la liaison du premier raccord de soupape de compensation (80.1) avec le deuxième raccord de soupape de compensation (80.2) ainsi que la liaison du deuxième raccord de soupape de compensation (80.2) avec le troisième raccord de soupape de compensation (80.3) sont respectivement étranglées.

18. Dispositif de frein de stationnement électropneumatique selon l'une des revendications précédentes, dans lequel l'unité de soupape de frein de stationnement (24) et la soupape de dérivation (50) sont alimentées en tension électrique par deux sources de tension (210, 212) indépendantes.

19. Système de freinage pneumatique (204) pouvant être commandé électroniquement pour un véhicule (200, 202), comprenant
au moins un premier actionneur de frein d'essieu avant (228a) et un second actionneur de frein d'essieu avant (228b) sur un essieu avant (VA) du véhicule (200) et au moins un premier actionneur de frein d'essieu arrière (242a) et un second actionneur de frein d'essieu arrière (242b) sur un essieu arrière (HA1, HA2) du véhicule (200) ;
un système primaire (B1) comportant une unité de commande primaire (400) au moins pour la commande du premier actionneur de frein d'essieu avant (228a), du second actionneur de frein d'essieu avant (228b), du premier actionneur de frein d'essieu arrière (242a) et du second actionneur de frein d'essieu arrière (242b) ; et
un dispositif de frein de stationnement électropneumatique (1) selon l'une des revendications 1 à 18, dans lequel au moins un premier cylindre de frein à accumulateur à ressort (232a) est raccordé à l'au moins un raccord d'accumulateur à ressort (8, 9) sur l'essieu arrière (HA1, HA2), et dans lequel la soupape de dérivation (50) peut être commutée pour l'aération et pour la purge du premier cylindre de frein à accumulateur à ressort (242a), dans lequel la soupape de dérivation (50) est commandée et commutée indépendamment de l'unité de soupape de frein de stationnement (24).

20. Système de freinage pneumatique (1) pouvant être commandé électroniquement selon la revendication 19, dans lequel l'unité de soupape de frein de stationnement (24) est connectée à une unité de commande de frein de stationnement (10) et reçoit en provenance de celle-ci des signaux de commutation (S1, S2), et dans lequel la soupape de dérivation (50) est reliée à une autre unité de commande électronique (40) indépendante de l'unité de soupape de frein de stationnement (24) et reçoit en provenance de celle-ci au moins un signal de commutation de dérivation (SB).

21. Système de freinage pneumatique (1) pouvant être commandé électroniquement selon la revendication 20, dans lequel l'unité de commande de frein de stationnement (10) est connectée à une première source de tension (212) et est alimentée en tension électrique par celle-ci, et l'autre unité de commande électronique (40) est connectée à une seconde source de tension (210) et est alimentée en tension électrique par celle-ci.

22. Système de freinage pneumatique (1) pouvant être commandé électroniquement selon l'une des revendications 19 à 21 précédentes, dans lequel l'unité de commande primaire (400) forme ou présente l'autre unité de commande (40).

23. Système de freinage pneumatique (1) pouvant être commandé électroniquement selon l'une des revendications 19 à 22 précédentes, présentant en outre un système secondaire (B2) comportant une unité de commande secondaire (404) au moins pour la commande du premier actionneur de frein d'essieu avant (20a), du second actionneur de frein d'essieu avant (20b), du premier actionneur de frein d'essieu arrière (18a) et du second actionneur de frein d'essieu arrière (18b), dans lequel, dans le cas où une erreur (F) est déterminée dans le système primaire (6), la commande du système de freinage pneumatique (1) pouvant être commandé électroniquement est effectuée au moins partiellement par le système secondaire (8).

24. Système de freinage pneumatique pouvant être commandé électroniquement selon la revendication 23, dans lequel l'unité de commande secondaire (40) forme ou présente l'autre unité de commande.

25. Véhicule (2), en particulier véhicule utilitaire (200), comportant un essieu avant (VA), au moins un premier essieu arrière (HA1) et un système de freinage pneumatique (1) pouvant être commandé électroniquement selon l'une des revendications 19 à 24 précédentes.

26. Procédé pour la commande d'un système de freinage pneumatique pouvant être commandé électroniquement, de préférence selon l'une des revendications 19 à 24, comportant les étapes consistant à :
- commander une unité de soupape de frein de stationnement au moyen d'une unité de commande de frein de stationnement (10) pour l'aération et la purge d'au moins un cylindre de frein à accumulateur à ressort (19a) sur un essieu arrière (HA1, HA2) d'un véhicule utilitaire, dans lequel l'unité de soupape de frein de stationnement est reliée à une réserve de frein de stationnement par l'intermédiaire d'une soupape antiretour et reçoit en provenance de celle-ci une pression de réserve ;
- déterminer un défaut dans le système de freinage pneumatique pouvant être commandé électroniquement, en particulier l'unité de commande de frein de stationnement (10) ou l'unité de soupape de frein de stationnement ;
- commuter une soupape de dérivation qui est reliée à la fois à l'au moins un cylindre de frein à accumulateur à ressort et à la réserve de frein de stationnement, dans une position de purge pour purger l'au moins un cylindre de frein à accumulateur à ressort ;
dans lequel la soupape de dérivation commute en réponse à un signal de commutation de dérivation qui est fourni par une autre unité de commande électronique qui est indépendante de l'unité de commande de frein de stationnement (10).

27. Procédé selon la revendication 26, dans lequel l'unité de commande de frein de stationnement (10) est connectée à une première source de tension et est alimentée en tension électrique par celle-ci, et l'autre unité de commande est connectée à une seconde source de tension et est alimentée en tension électrique par celle-ci.

28. Procédé selon la revendication 26 ou 27, comprenant l'étape consistant à :
- abaisser la pression de réserve dans la réserve de frein de stationnement pour purger l'au moins un cylindre de frein à accumulateur à ressort.
